(19) **Europäisches Patentamt**
**European Patent Office**
**Office européen des brevets**

(11) **EP 3 984 958 A1**

(12) **EUROPEAN PATENT APPLICATION**
published in accordance with Art. 153(4) EPC

(43) Date of publication:
**20.04.2022 Bulletin 2022/16**

(21) Application number: **20822390.9**

(22) Date of filing: **11.06.2020**

(51) International Patent Classification (IPC):
$C01G\ 31/00^{(2006.01)}$    $B09B\ 3/00^{(2022.01)}$
$C22B\ 3/12^{(2006.01)}$    $C22B\ 34/22^{(2006.01)}$
$H01M\ 8/02^{(2016.01)}$    $H01M\ 8/18^{(2006.01)}$

(52) Cooperative Patent Classification (CPC):
**B09B 3/00; C01G 31/00; C22B 3/12; C22B 34/22; H01M 8/02; H01M 8/18;** Y02E 60/50; Y02P 10/20

(86) International application number:
**PCT/JP2020/023075**

(87) International publication number:
**WO 2020/250989 (17.12.2020 Gazette 2020/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.06.2019 JP 2019109344**
**27.08.2019 JP 2019154741**

(71) Applicant: **Kawasaki Jukogyo Kabushiki Kaisha Hyogo 650-8670 (JP)**

(72) Inventors:
• **MASAMOTO, Manabu**
**Chuo-ku, Kobe-shi**
**Hyogo 650-8670 (JP)**

• **NISHINO, Takashi**
**Chuo-ku, Kobe-shi**
**Hyogo 650-8670 (JP)**
• **KITAGAWA, Yuta**
**Chuo-ku, Kobe-shi**
**Hyogo 650-8670 (JP)**
• **AKAGI Daichi**
**Chuo-ku, Kobe-shi**
**Hyogo 650-8670 (JP)**

(74) Representative: **Leinweber & Zimmermann Patentanwalts-PartG mbB European Patent Attorneys Viktualienmarkt 8 80331 München (DE)**

(54) **METHOD AND APPARATUS FOR PRODUCING VANADIUM COMPOUND, AND METHOD AND APPARATUS FOR PRODUCING REDOX-FLOW BATTERY ELECTROLYTE**

(57) This production method includes: an alkali extraction step (step 12) of adding an alkali and water, or an alkali solution, to raw material ash containing an ammonium sulfate component, sulfuric acid, vanadium, and at least one other metal selected from nickel, iron, and magnesium, such that a pH of 13 or higher is achieved, to obtain an alkali leachate; a solid-liquid separation step (step 13) of performing solid-liquid separation on the alkali leachate to obtain a leach filtrate containing vanadium; an evaporation concentration step (step 14) of evaporating and concentrating the leach filtrate to obtain a concentrated liquid; and a crystallization/solid-liquid separation step (step 15) of cooling and crystalizing the concentrated liquid and recovering a precipitate containing a vanadium compound. Another production method includes an alkali extraction step (step 32), a solid-liquid separation step (step 4), an evaporation concentration step (step 36), an alkali concentration adjustment step (step 37) of further adding an alkali or an alkali solution to a concentrated liquid to obtain a concentration-adjusted liquid, and a crystallization/solid-liquid separation step (step 38).

EP 3 984 958 A1

**(Cont. next page)**

FIG. 1A

```
┌─────────────────────────────────┐
│ COMBUSTION ASH (RAW MATERIAL)   │ ～ 10
└─────────────────────────────────┘
         │
SODIUM HYDROXIDE
         │
         ▼
┌─────────────────────────────────┐
│      ALKALI EXTRACTION          │ ～ 12
└─────────────────────────────────┘
         │
         ▼
┌─────────────────────────────────┐
│    SOLID-LIQUID SEPARATION      │ ～ 13
└─────────────────────────────────┘
         │
         ▼
┌─────────────────────────────────┐
│   EVAPORATION CONCENTRATION     │ ～ 14
└─────────────────────────────────┘
         │
         ▼
┌─────────────────────────────────┐
│ CRYSTALLIZATION/SOLID-LIQUID    │ ～ 15  ──→ CRYSTALLIZATION
│         SEPARATION              │                FILTRATE
└─────────────────────────────────┘
         │
    SOLID COMPONENT
         │
         ▼
┌─────────────────────────────────┐
│   RECOVER VANADIUM              │ ～ 17
│   RAW MATERIAL                  │
└─────────────────────────────────┘
```

FIG. 1B

| | | | |
|---|---|---|---|
| RAW MATERIAL ASH | | | ～ 10 |
| CARBON | AMMONIUM SULFATE | SULFURIC ACID | VANA |

↓

| | | | |
|---|---|---|---|
| RAW MATERIAL ASH | | | ～ 12 |
| CARBON | AMMONIUM SULFATE | SULFURIC ACID | VANA |
| NaOH | | | |

↓

| | | |
|---|---|---|
| FILTRATE | | ～ 13 |
| AMMONIUM SULFATE | SULFURIC ACID | VANA |
| NaOH | | |

↓

～ 14

| | | |
|---|---|---|
| FILTRATE | | |
| | | |
| NaOH | | |

⇩ VOLUME REDUCTION (1/5)

CRYSTALLIZATION FILTRATE

↓

| AMMONIUM SULFATE | SODIUM SULFATE | Na VANA |
|---|---|---|

⇕   ～ 15

| | | | |
|---|---|---|---|
| FILTRATE | AMMONIUM SULFATE | SULFURIC ACID | VANA |
| NaOH | | | |

CRYSTALLIZATION FILTRATE

FIG. 1A          FIG. 1B

**Description**

TECHNICAL FIELD

The present invention relates to production methods and production apparatuses for a vanadium compound. More specifically, the present invention relates to production methods and production apparatuses for separating a vanadium compound from combustion ash or the like. From another aspect, the present invention relates to production methods and production apparatuses for obtaining a redox-flow battery electrolyte by using a vanadium compound.

BACKGROUND ART

Vanadium is used as a raw material for electrolytes that are main components of redox-flow batteries which are large storage batteries. In a redox-flow battery containing vanadium (vanadium redox-flow battery), inexpensive high-purity vanadium containing no impurity metal compounds of nickel (Ni), iron (Fe), magnesium (Mg), and the like is required as a component of an electrolyte. However, the vanadium products that are generally distributed are ferrovanadium to be added to steel materials, and have the disadvantages that the vanadium products coexist with iron and have low purity and that the vanadium products are mainly for steel materials and cannot be supplied in large quantities.

For example, Patent Literature 1 proposes a technique for recovering a vanadium compound having a small amount of impurity metal compounds of iron and the like, using combustion ash as a raw material. This method includes: an alkaline leaching step of immersing incineration ash in an alkaline solution to leach vanadium from the incineration ash into the alkaline solution and obtain a leachate slurry; a solid-liquid separation step of performing solid-liquid separation on the leachate slurry obtained in the alkaline leaching step, to remove insoluble matter and obtain a leachate; a pH adjustment step of adding an acid to the leachate after the solid-liquid separation, to make the leachate acidic; an aging step of aging the leachate after the pH adjustment, until a precipitate forms in the leachate; and a separation step of separating the precipitate from the leachate after the aging step.

Patent Literature 2 discloses a production method for a redox-flow battery electrolyte, including: a first step of performing solid-liquid separation into washing residue and washing wastewater after performing pH adjustment while washing dust collector ash with water; a second step of performing solid-liquid separation into a first filtrate and first filtration residue after adding an alkali solution to the washing residue and heating the mixture; a third step of performing solid-liquid separation into a second filtrate and second filtration residue after precipitating an alkali vanadate in the first filtrate; a fourth step of neutralizing the second filtration residue with an acid, mixing the washing wastewater with the second filtration residue, and performing solid-liquid separation to take out third filtration residue containing generated vanadium pentoxide; a fifth step of roasting and reducing the third filtration residue to generate divanadium tetraoxide; and a sixth step of dissolving the divanadium tetraoxide in sulfuric acid to produce a vanadyl sulfate electrolyte.

It is stated that in the first step of Patent Literature 2, by adjusting the pH of the suspension to preferably 6 to 8, it is possible to prevent the dissolution of metal impurities such as iron, nickel, and the like in the suspension. In addition, it is stated that in the second step, the heating temperature is preferably set to 50 to 100°C, vanadium is contained in the first filtrate in the form of a solution, and the first filtrate is separated from the first filtration residue through solid-liquid separation. Furthermore, it is stated that in the third step, the method for precipitating the alkali vanadate is not particularly limited, a method of selectively separating the alkali vanadate based on the difference in solubility, or the like, can be used, and sodium vanadate ($NaVO_3$) precipitates as crystals of the alkali vanadate. Moreover, it is stated that the second filtrate obtained in the third step is reused as the alkali solution in the second step, and since the alkali concentration of the second filtrate is decreased, the second filtrate is supplied with an alkali solution for concentration recovery so as to be an alkali solution having a predetermined concentration, and then is reused as the alkali solution in the second step and added to the washing residue.

CITATION LIST

PATENT LITERATURE

Patent Literature 1: WO2017/208471 (abstract, paragraph 0024, etc.)
Patent Literature 2: JP2019-46723 (abstract, Claim 1, Claim 3, paragraph 025, paragraphs 0028 to 0032, etc.)

SUMMARY OF THE INVENTION

PROBLEMS TO BE SOLVED BY THE INVENTION

Combustion ash is obtained by burning atmospheric distillation residual oil obtained by atmospheric distillation of heavy oil such as crude oil and the like, vacuum distillation residual oil obtained by vacuum distillation of heavy oil such as crude oil and the like, oil coke, oil sand, and the like, and contains metals such as nickel (Ni), iron (Fe), magnesium (Mg), and the like in addition to vanadium (V). Usually, the vanadium content (concentration) of combustion ash is low. In order to selectively extract vanadium into a leachate in a higher yield from combustion ash by a method of leaching vanadium into a solution as in Patent Literature 1, it is necessary to add a large amount of an alkali solution to the solid component (combustion ash), so that it is difficult to achieve a practical and inexpensive processing cost.

Moreover, in the method of Patent Literature 1, it is necessary to add an acid ($H_2SO_4$ or the like) to the leachate after alkali leaching to make the leachate acidic, so that the cost of the acidifying agent and the time and effort of addition are required. Furthermore, since the vanadium content of the incineration ash is low, a relatively large amount of alkali is added, so that a large amount of an acid is required, which leads to a further increase in the cost of chemicals. Furthermore, in order to recover the vanadium remaining in the leachate from which the precipitate is separated after the aging step, it is preferable to recycle the leachate in the alkaline leaching step. However, since the leachate is adjusted to be acidic, it is necessary to add an alkali solution again, so that there is a problem that a lot of cost, time, and effort are required.

In Patent Literature 2, the first filtrate is obtained by adding the alkali solution to the washing residue. Since the dust collector ash contains a large amount of sulfate ion, the washing residue contains sulfate ions, and when the alkali solution is added thereto, alkali sulfates such as sodium sulfate (mirabilite) and the like are generated. Since it is difficult to separate the alkali sulfates in the process of generating vanadium, the alkali sulfates are likely to remain as impurities in the finally obtained purified vanadium product. In addition, in Patent Literature 2, the second filtrate obtained in the third step is recovered and reused as the alkali solution in the second step to reduce the cost of chemicals. As a result of the combustion ash, which is a vanadium source, containing a lot of sulfate ions, the amount of the alkali sulfates in the obtained second filtration residue is increased, which causes a decrease in product purity. In Patent Literature 2, a treatment for separating the alkali sulfates is not performed, and thus it is considered that the alkali sulfates remain as impurities in the purified vanadium product.

Furthermore, it is stated that in the third step of Patent Literature 2, the method of selective separation based on the difference in solubility can be used, but no specific method is described. Since the alkali concentration of the second filtrate obtained in the third step is decreased as compared to that of the first filtrate, it can be seen that the solution is not concentrated in the crystallization of the third step. Therefore, it is necessary to treat a large amount of the solution, so that an apparatus is increased in size and the cost is increased. In addition, it is necessary to add a large amount of a high-concentration alkali when recycling the second filtrate in the second step, which further increases the cost.

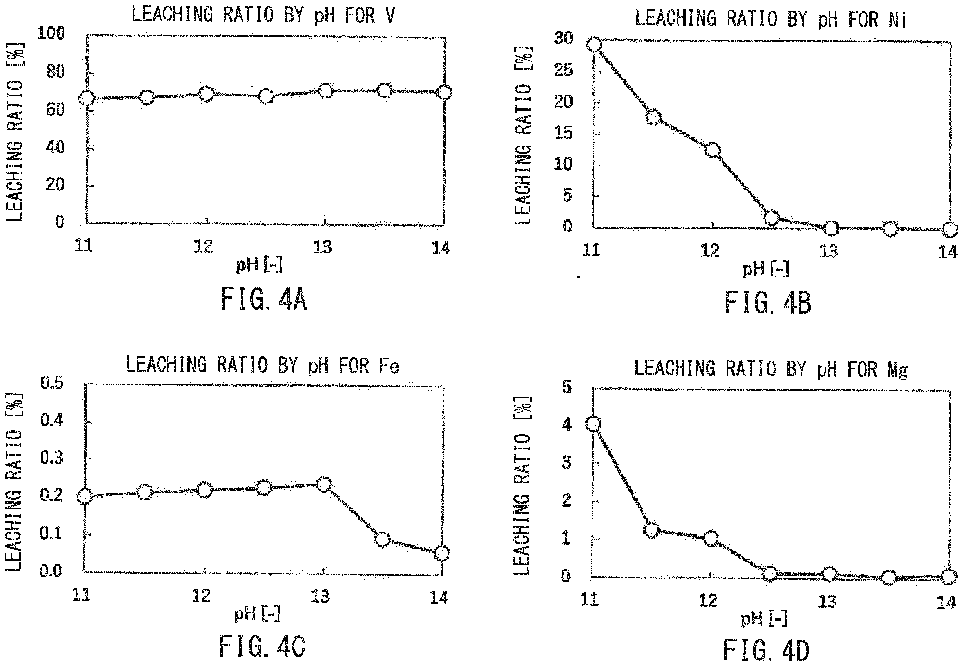

Furthermore, in Patent Literature 2, sodium vanadate ($NaVO_3$) is generated in the fourth step. Therefore, judging from a known vanadium phase diagram, the pH after the alkali addition in the second step is estimated to be about pH 7 to 9. In addition, FIG. 4 shows changes in leaching ratio due to temperature and pH for various metals, wherein FIG. 4A shows a change in leaching ratio for vanadium, FIG. 4B shows a change in leaching ratio for nickel, FIG. 4C shows a change in leaching ratio for iron, and FIG. 4D shows a change in leaching ratio for magnesium. From this figure, it can be seen that the leaching ratio, in particular for nickel and magnesium, increases in the region where the pH is 11.5 or lower. Therefore, in Patent Literature 2 as well, since alkali leaching is performed in a low pH range of 7 to 9, a large amount of metal impurities such as nickel, magnesium, and the like are leached, and as a result, these metal impurities are also contained in the purified vanadium product.

A first object of the present invention is to provide a production method and a production apparatus for a vanadium compound which allow an obtained vanadium compound to have a higher purity and which can be implemented at a lower cost, and a production method and a production apparatus for a redox-flow battery electrolyte.

From another aspect, in Patent Literature 2, after the addition of the alkali solution, heat treatment is performed in order to extract vanadium from the washing residue containing vanadium, so that there is a problem that an energy burden is caused.

Moreover, for example, evaporation crystallization or cooling crystallization is known as a method for recovering a solid component (cake) containing vanadium from an alkali leachate. In this method, by utilizing the difference in solubility between an alkali vanadate salt and an alkali sulfate, the content of the alkali sulfate, which is an impurity, can be reduced. However, in the case of an alkali leachate having a high alkali content and a high viscosity, there is a problem that the energy burden required for evaporation concentration and temperature adjustment increases. Furthermore, production trouble caused by the occurrence of scaling, a decrease in production efficiency due to scale removal, etc., are also problems.

A second object of the present invention is to provide a method for efficiently producing a higher-purity vanadium compound with which production trouble is reduced.

SOLUTION TO THE PROBLEMS

The present inventors have focused on the fact that the solubility of vanadium compounds such as sodium orthovanadate(V) and the like and the solubility of alkali sulfates such as sodium sulfate and the like differ depending on the conditions of temperature and alkali concentration, further have found optimum temperature and alkali concentration conditions for dissolving alkali sulfates and precipitating alkali orthovanadate(V), and have completed the present invention.

That is, a production method for a vanadium compound according to the present invention includes: an alkali extraction step of adding an alkali and water, or an alkali solution, to raw material ash containing at least an ammonium sulfate component including ammonium sulfate and/or ammonium hydrogen sulfate, sulfuric acid, vanadium, and at least one other metal selected from nickel, iron, and magnesium, such that a pH of 13 or higher is achieved, to leach the vanadium into a liquid phase to obtain an alkali leachate; a solid-liquid separation step of performing solid-liquid separation on the alkali leachate to remove insoluble matter as a solid component and obtain, as a leach filtrate, the alkali leachate containing vanadium; an evaporation concentration step of evaporating and concentrating the leach filtrate to obtain a concentrated liquid; and a crystallization/solid-liquid separation step of cooling the concentration liquid to a predetermined cooling temperature to crystalize the concentration liquid, and recovering, as a solid component, a precipitate containing a vanadium compound. In this production method, in the concentrated liquid, at the cooling temperature, a concentration of the vanadium compound is not less than a saturation concentration thereof and a concentration of an alkali sulfate is not greater than a saturation concentration thereof.

Preferably, the production method further includes a raw material ash washing step of washing the raw material ash, at a stage previous to the alkali extraction step.

Preferably, the production method further includes a recycling step of reusing a crystallization filtrate separated from the solid component in the crystallization/solid-liquid separation step, in the alkali extraction step, at a stage subsequent to the crystallization/solid-liquid separation step.

Preferably, the production method further includes a crystallization filtrate amount adjustment step of adjusting an amount of the crystallization filtrate to be recycled, such that a total of sulfate ion brought in by the crystallization filtrate and sulfate ion brought in from the raw material ash in the alkali extraction step is not greater than an amount equivalent to a saturation concentration after cooling in the crystallization/solid-liquid separation step.

Preferably, the production method further includes an oxidizing step of oxidizing the raw material ash, at a stage previous to the alkali extraction step.

Preferably, the production method further includes a solid component washing step of washing the solid component, recovering a washing liquid containing vanadium, and transferring the washing liquid to the evaporation concentration step together with the leach filtrate, at a stage subsequent to the alkali extraction step.

A production method for a redox-flow battery electrolyte according to the present invention includes an electrolyte production step of producing a redox-flow battery electrolyte using, as a raw material, the vanadium compound produced by any of the above-described production methods for a vanadium compound.

A production apparatus for a vanadium compound according to the present invention includes: alkali extraction means that adds an alkali and water, or an alkali solution, to raw material ash containing at least an ammonium sulfate component including ammonium sulfate and/or ammonium hydrogen sulfate, sulfuric acid, vanadium, and at least one other metal selected from nickel, iron, and magnesium, such that a pH of 13 or higher is achieved, to leach the vanadium into a liquid phase to obtain an alkali leachate containing vanadium; solid-liquid separation means that performs solid-liquid separation on the alkali leachate to remove insoluble matter as a solid component and obtain, as a leach filtrate, an alkali leachate containing vanadium; evaporation concentration means that evaporates and concentrates the leach filtrate to obtain a concentrated liquid; and crystallization/solid-liquid separation means that cools the concentration liquid to a predetermined cooling temperature to crystalize the concentration liquid, and recovers, as a solid component, a precipitate containing a vanadium compound. In this production apparatus, in the concentrated liquid, at the cooling temperature, a concentration of the vanadium compound is not less than a saturation concentration thereof and a concentration of an alkali sulfate is not greater than a saturation concentration thereof.

Preferably, the production apparatus further includes raw material ash washing means that washes the raw material ash, at a stage previous to the alkali extraction means.

Preferably, the production apparatus further includes recycling means that reuses a crystallization filtrate separated from the solid component in the crystallization/solid-liquid separation means, in the alkali extraction means, at a stage subsequent to the crystallization/solid-liquid separation means.

Preferably, the production apparatus further includes crystallization filtrate amount adjustment means that adjusts an amount of the crystallization filtrate to be recycled, such that a total of sulfate ion brought in by the crystallization filtrate and sulfate ion brought in from the raw material ash in the alkali extraction means is not greater than an amount equivalent to a saturation concentration after cooling in the crystallization/solid-liquid separation means.

Preferably, the production apparatus further includes oxidizing means that oxidizes the raw material ash, at a stage previous to the alkali extraction means.

Preferably, the production apparatus further includes solid component washing means that washes the solid component, recovers a washing liquid containing vanadium, and transfers the washing liquid to the evaporation concentration means together with the leach filtrate, at a stage subsequent to the alkali extraction means.

A production apparatus for a redox-flow battery electrolyte according to the present invention includes electrolyte production means that produces a redox-flow battery electrolyte using, as a raw material, the vanadium compound separated by any of the above-described production apparatuses for a vanadium compound

From another aspect, a production method for a vanadium compound according to the present invention includes:

> (1) an alkali extraction step of adding an alkali and water, or an alkali solution, in an amount that achieves a pH of 13 or higher, to raw material ash containing at least an ammonium sulfate component including ammonium sulfate and/or ammonium hydrogen sulfate, sulfuric acid, and vanadium, to leach the vanadium into a liquid phase to obtain an alkali leachate containing vanadium;
> (2) a solid-liquid separation step of performing solid-liquid separation on the alkali leachate to obtain a leach filtrate containing vanadium;
> (3) an evaporation concentration step of evaporating and concentrating the leach filtrate to obtain a concentrated liquid;
> (4) an alkali concentration adjustment step of further adding an alkali or an alkali solution to the concentrated liquid to obtain a concentration-adjusted liquid; and
> (5) a crystallization/solid-liquid separation step of cooling the concentration-adjusted liquid to a predetermined cooling temperature to crystalize the concentration-adjusted liquid, and recovering, as a solid component, a precipitate containing a vanadium compound. Here, an alkali concentration of the concentration-adjusted liquid is adjusted such that, at the cooling temperature, a concentration of the vanadium compound is not less than a saturation concentration thereof and a concentration of an alkali sulfate is not greater than a saturation concentration thereof.

Preferably, the alkali is a hydroxide of an alkali metal or an alkali earth metal. Preferably, the alkali concentration of the concentration-adjusted liquid is adjusted to be not less than 10 mass% and not greater than 25 mass% in the alkali concentration adjustment step.

Preferably, the production method further includes a raw material ash washing step of washing the raw material ash under a condition of a pH less than 6 before the alkali extraction step.

Preferably, in the alkali extraction step, the vanadium is leached into the liquid phase at a temperature of not lower than 10°C and lower than 50°C.

From another aspect, a production method for a redox-flow battery electrolyte according to the present invention includes:

> (1) an alkali extraction step of adding an alkali and water, or an alkali solution, in an amount that achieves a pH of 13 or higher, to raw material ash containing at least an ammonium sulfate component including ammonium sulfate and/or ammonium hydrogen sulfate, sulfuric acid, and vanadium, to leach the vanadium into a liquid phase to obtain an alkali leachate containing vanadium;
> (2) a solid-liquid separation step of performing solid-liquid separation on the alkali leachate to obtain a leach filtrate containing vanadium;
> (3) an evaporation concentration step of evaporating and concentrating the leach filtrate to obtain a concentrated liquid;
> (4) an alkali concentration adjustment step of further adding an alkali or an alkali solution to the concentrated liquid to obtain a concentration-adjusted liquid;
> (5) a crystallization/solid-liquid separation step of cooling the concentration-adjusted liquid to a predetermined cooling temperature to crystalize the concentration-adjusted liquid, and recovering, as a solid component, a precipitate containing a vanadium compound; and
> (6) an electrolyte production step of producing a redox-flow battery electrolyte using, as a raw material, the precipitate containing the vanadium compound. Here, an alkali concentration of the concentration-adjusted liquid is adjusted such that, at the cooling temperature, a concentration of the vanadium compound is not less than a saturation concentration thereof and a concentration of an alkali sulfate is not greater than a saturation concentration thereof.

From another aspect, a production apparatus for a vanadium compound according to the present invention includes: alkali extraction means that adds an alkali and water, or an alkali solution, in an amount that achieves a pH of 13 or higher, to raw material ash containing at least an ammonium sulfate component including ammonium sulfate and/or ammonium hydrogen sulfate, sulfuric acid, and vanadium, to leach the vanadium into a liquid phase to obtain an alkali leachate containing vanadium; solid-liquid separation means that performs solid-liquid separation on the alkali leachate to obtain a leach filtrate containing vanadium; evaporation concentration means that evaporates and concentrates the leach filtrate to obtain a concentrated liquid; alkali concentration adjustment means that further adds an alkali or an alkali solution to the concentrated liquid to obtain a concentration-adjusted liquid; and crystallization/solid-liquid separation means that cools the concentration-adjusted liquid to a predetermined cooling temperature to crystalize the concentration-adjusted liquid, and recovers, as a solid component, a precipitate containing a vanadium compound. In this production apparatus, an alkali concentration of the concentration-adjusted liquid is adjusted by the alkali concentration adjustment means such that, at the cooling temperature, a concentration of the vanadium compound is not less than a saturation concentration thereof and a concentration of an alkali sulfate is not greater than a saturation concentration thereof.

Preferably, the production apparatus further includes raw material ash washing means that washes the raw material ash with washing water before adding the alkali and the water or the alkali solution to the raw material ash, and pH adjustment means that adjusts a pH during washing to be less than 6.

Preferably, the production apparatus further includes temperature control means that, while the vanadium is leached into the liquid phase by adding the alkali and the water or the alkali solution to the raw material ash, controls a temperature of the leaching to be not lower than 10°C and lower than 50°C.

From another aspect, a production apparatus for a redox-flow battery electrolyte according to the present invention includes: alkali extraction means that adds an alkali and water, or an alkali solution, in an amount that achieves a pH of 13 or higher, to raw material ash containing at least an ammonium sulfate component including ammonium sulfate and/or ammonium hydrogen sulfate, sulfuric acid, and vanadium, to leach the vanadium into a liquid phase to obtain an alkali leachate containing vanadium; solid-liquid separation means that performs solid-liquid separation on the alkali leachate to obtain a leach filtrate containing vanadium; evaporation concentration means that evaporates and concentrates the leach filtrate to obtain a concentrated liquid; alkali concentration adjustment means that further adds an alkali or an alkali solution to the concentrated liquid to obtain a concentration-adjusted liquid; crystallization/solid-liquid separation means that cools the concentration-adjusted liquid to a predetermined cooling temperature to crystalize the concentration-adjusted liquid, and recovers, as a solid component, a precipitate containing a vanadium compound; and electrolyte production means that produces a redox-flow battery electrolyte using, as a raw material, the precipitate containing the vanadium compound. In this production apparatus, an alkali concentration of the concentration-adjusted liquid is adjusted by the alkali concentration adjustment means such that, at the cooling temperature, a concentration of the vanadium compound is not less than a saturation concentration thereof and a concentration of an alkali sulfate is not greater than a saturation concentration thereof.

ADVANTAGEOUS EFFECTS OF THE INVENTION

In the production method for a vanadium compound according to the present invention, a pH of 13 or higher is achieved in the alkali extraction step, and a leach filtrate containing vanadium is recovered in the solid-liquid separation step. Subsequently, in the evaporation concentration step, the leach filtrate is evaporated and concentrated such that the alkali has a predetermined concentration, and in the crystallization/solid-liquid separation step, a precipitate containing a vanadium compound is recovered. In the concentrated liquid, at the cooling temperature, the concentration of the vanadium compound is not less than the saturation concentration thereof and the concentration of the alkali sulfate is not greater than the saturation concentration thereof. Therefore, the alkali sulfate can be selectively removed, and the vanadium compound can be efficiently recovered. As described above, in this production method, it is unnecessary to add an acid as in the conventional art, and the vanadium compound is selectively precipitated and recovered on the basis of the difference in solubility under the conditions of temperature and alkali concentration between the vanadium compound and the alkali sulfate. Therefore, vanadium can be more easily and selectively separated at a lower cost as compared with the conventional art.

Moreover, in the alkali extraction step, since leaching is performed in a higher pH range of 13 or higher, impurities such as nickel and the like are less likely to be leached, and the purity of the finally obtained vanadium compound can be increased.

Furthermore, since the crystallization filtrate obtained by separating the solid component containing the vanadium compound in the crystallization/solid-liquid separation step contains the alkali in addition to the vanadium compound that has not precipitated, the crystallization filtrate can be recycled and used again in the alkali extraction step as necessary. In addition, in the present invention, since the leach filtrate is evaporated and concentrated, the alkali concentration of the obtained concentrated liquid is higher, and it is unnecessary to add an alkali for restoring the alkali concentration when recycling the concentrated liquid in the alkali extraction step, or the amount of such an alkali can be smaller, so that the concentrated liquid can be recycled at a lower cost.

That is, in the production method for a vanadium compound according to the present invention, since the alkali sulfate and metal impurities can be selectively removed, the purity of the obtained vanadium compound is higher, a large apparatus is not required, and the amount of the alkali used is smaller. Therefore, it is possible to provide a production method for a vanadium compound which can be carried out at a lower cost. In addition, a redox-flow battery electrolyte can be easily produced at a lower cost by using, as a raw material, the higher-purity vanadium compound easily and selectively separated at a lower cost by the production method.

In the production apparatus for a vanadium compound according to the present invention, a pH of 13 or higher is achieved in the alkali extraction step, and a leach filtrate containing vanadium is recovered by the solid-liquid separation means. Subsequently, in the evaporation concentration step, the leach filtrate is evaporated and concentrated such that the alkali has a predetermined concentration, and in the crystallization/solid-liquid separation step, a precipitate containing a vanadium compound is recovered. As described above, in this production apparatus, it is unnecessary to add an acid as in the conventional art, and the vanadium compound is selectively precipitated and recovered on the basis of the difference in solubility under the conditions of temperature and alkali concentration between the vanadium compound and the alkali sulfate. Therefore, vanadium can be more easily and selectively separated at a lower cost as compared with the conventional art. In addition, since the crystallization filtrate obtained by separating the solid component containing the vanadium compound by the crystallization/solid-liquid separation means contains the alkali in addition to the vanadium compound that has not precipitated, the crystallization filtrate can be recycled and used again in the alkali extraction means as necessary. Moreover, a redox-flow battery electrolyte can be easily produced at a lower cost by using, as a raw material, the higher-purity vanadium compound easily and selectively separated at a lower cost by the production apparatus.

From another aspect, in the production method for a vanadium compound according to the present invention, in the alkali extraction step, an alkali and water, or an alkali solution, is added in an amount that achieves a pH of 13 or higher, and in the solid-liquid separation step, a leach filtrate containing vanadium is recovered. By achieving a pH of 13 or higher in the alkali extraction step, vanadium can be selectively extracted in a higher yield without requiring heat treatment.

In this production method, subsequent to the solid-liquid separation step, the leach filtrate is concentrated in the evaporation concentration step, and then an alkali or an alkali solution is further added to the obtained concentrated liquid in the alkali concentration adjustment step to adjust the concentrated liquid so as to have a predetermined alkali concentration. The alkali concentration of the leach filtrate at the time of evaporation concentration is lower, and a large boiling point increase does not occur, so that the energy burden required for evaporation concentration is reduced. In addition, production trouble, such as the occurrence of scaling during evaporation concentration, due to the alkali having a high concentration can be avoided.

In this production method, after the alkali concentration adjustment step, a precipitate containing a vanadium compound is recovered in the crystallization/solid-liquid separation step. In the alkali concentration adjustment step, the alkali concentration is adjusted such that, at the cooling temperature in the crystallization/solid-liquid separation step, the concentration of the vanadium compound is not less than a saturation concentration thereof and the concentration of an alkali sulfate is not greater than a saturation concentration thereof. Therefore, in the present invention, the vanadium compound can be selectively precipitated and recovered on the basis of the difference in solubility between the vanadium compound and the alkali sulfate without adding an acid as in the conventional art.

As described above, with the production method according to the present invention, production trouble that may occur during evaporation concentration can be avoided, and vanadium can be selectively separated at a lower cost and more easily than in the conventional art. Furthermore, a redox-flow battery electrolyte can be easily and efficiently produced at a lower cost by avoiding production trouble and selectively separating vanadium at a lower cost and easily.

In the production apparatus according to the present invention, an alkali and water, or an alkali solution, is added by the alkali extraction means in an amount that achieves a pH of 13 or higher, and a leach filtrate containing vanadium is recovered by the solid-liquid separation means. By achieving a pH of 13 or higher by the alkali extraction means, vanadium can be selectively extracted in a higher yield without requiring heating means.

In this production apparatus, the leach filtrate is concentrated by the evaporation concentration means, and then an alkali or an alkali solution is further added to the obtained concentrated liquid by the alkali concentration adjustment means to adjust the concentrated liquid so as to have a predetermined alkali concentration. The alkali concentration of the leach filtrate at the time of evaporation concentration is low, and a large boiling point increase does not occur, so that the energy burden required for evaporation concentration is reduced. In addition, production trouble, such as the occurrence of scaling during evaporation concentration, due to the alkali having a high concentration can be avoided.

In the production apparatus, after the alkali concentration adjustment, a precipitate containing a vanadium compound is recovered by the crystallization/solid-liquid separation means. The alkali concentration is adjusted by the alkali concentration adjustment means such that, at the cooling temperature, the concentration of the vanadium compound is not less than a saturation concentration thereof and the concentration of an alkali sulfate is not greater than a saturation concentration thereof. Therefore, in the present invention, the vanadium compound can be selectively precipitated and recovered on the basis of the difference in solubility between the vanadium compound and the alkali sulfate without requiring means for adding an acid as in the conventional art.

As described above, with the production apparatus according to the present invention, production trouble that may occur during evaporation concentration can be avoided, and vanadium can be selectively separated at a lower cost and more easily than in the conventional art. Furthermore, a redox-flow battery electrolyte can be easily and efficiently produced at a lower cost by avoiding production trouble and selectively separating vanadium at a lower cost and easily.

According to the present invention, it is possible to provide a production method for a vanadium compound and a production method for a redox-flow battery electrolyte which allow an obtained vanadium compound to have a higher purity and which can be carried out at a lower cost, a production apparatus for a vanadium compound, and a production apparatus for a redox-flow battery electrolyte. Furthermore, according to the present invention, it is possible to provide a production method for a vanadium compound and a production method for a redox-flow battery electrolyte which allow vanadium to be easily and selectively separated at a lower cost while avoiding trouble during production, a production apparatus for a vanadium compound, and a production apparatus for a redox-flow battery electrolyte.

BRIEF DESCRIPTION OF THE DRAWINGS

[FIG. 1]FIG. 1A is a flowchart showing a production method for a vanadium compound and a production method for a redox-flow battery electrolyte according to a first embodiment of the present invention, and FIG. 1B is a schematic diagram showing the transition of components in each step of FIG. 1A.

[FIG. 2] FIG. 2 shows graphs showing solubility curves of sodium orthovanadate (A) and sodium sulfate (B) at different temperatures and alkali concentrations.

[FIG. 3] FIG. 3A is a flowchart showing a production method for a vanadium compound and a production method for a redox-flow battery electrolyte according to a second embodiment of the present invention, and FIG. 3B is a schematic diagram showing the transition of components in each step of FIG. 3A.

[FIG. 4] FIG. 4 shows graphs showing changes in leaching ratio due to pH for vanadium (A), nickel (B), iron (C), and magnesium (D).

[FIG. 5] FIG. 5 is a graph showing the amount of a washing liquid recovered in a solid component washing step and the recovery rate of a vanadium compound.

[FIG. 6] FIG. 6A is a Pourbaix diagram showing changes in the state of vanadium due to pH and redox potential, and FIG. 6B is a graph showing changes in the ratio of vanadium washing loss due to pH adjustment during washing with water.

[FIG. 7] FIG. 7A is a flowchart showing a production method for a vanadium compound according to a third embodiment of the present invention, and FIG. 7B is a schematic diagram showing the transition of components in each step of FIG. 7A.

[FIG. 8] FIG. 8 is a graph showing the saturation solubility of sodium orthovanadate and sodium sulfate at different alkali concentrations.

[FIG. 9] FIG. 9A is a graph showing solubility curves of sodium orthovanadate ($Na_3VO_4$) at different temperatures and alkali concentrations, and FIG. 9B is a graph showing solubility curves of sodium sulfate ($Na_2SO_4$: mirabilite).

DESCRIPTION OF EMBODIMENTS

Hereinafter, the present invention will be described in detail based on preferred embodiments with appropriate reference to the drawings. The present invention can be carried out with modifications made as appropriate without changing the gist thereof. In the present specification, unless otherwise specified, "X to Y" means "not less than X and not greater than Y", and "%" means "mass%"

The present invention relates to a production method and a production apparatus for a vanadium compound, and a production method and a production apparatus, for a redox-flow battery electrolyte, using this vanadium compound as a raw material. The production method for a vanadium compound according to the present invention is a method for recovering, from raw material ash containing vanadium and/or a vanadium compound, the vanadium compound. Examples of such raw material ash include combustion ash of heavy oil, atmospheric distillation residual oil, vacuum distillation residual oil, and the like, residual ash such as incineration boiler ash, partially oxidized ash, petroleum coke ash, and oil sand, and the like. Hereinafter, first, second, and third embodiments, which are preferred embodiments of the present invention, will be sequentially described.

1. First embodiment

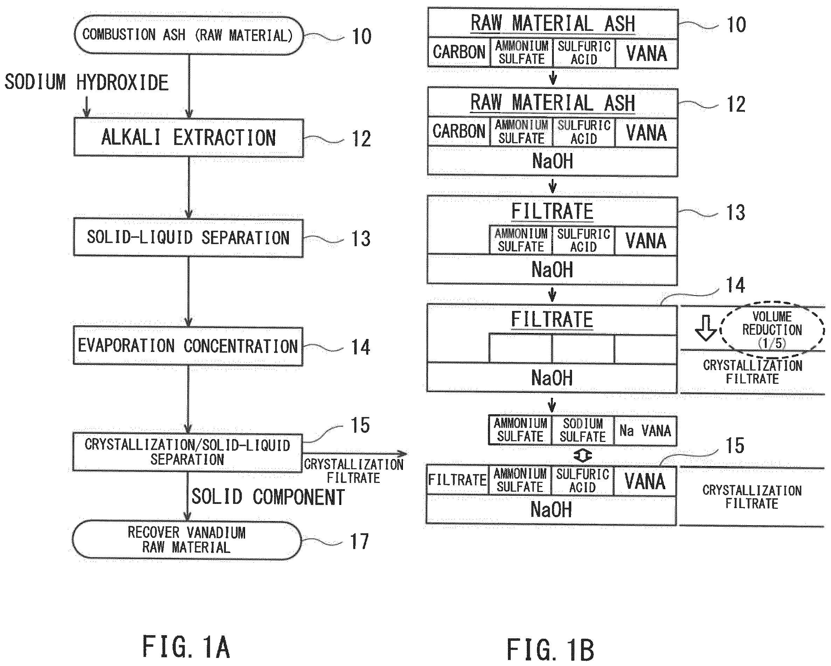

Hereinafter, the first embodiment of the present invention will be described with reference to FIG. 1. FIG. 1 shows a production method for a vanadium compound according to the first embodiment of the present invention, FIG. 1A is a flowchart showing steps of the production method for a vanadium compound, and FIG. 1B is a schematic diagram showing the transition of components in each step in the flowchart of FIG. 1A. In FIG. 1B, "VANA" means "vanadium", and "Na VANA" means "sodium orthovanadate ($Na_3VO_4$)". "AMMONIUM SULFATE" is composed of ammonium sulfate (($NH_4)_2SO_4$) and/or ammonium hydrogen sulfate ($NH_4HSO_4$), and is also referred to as ammonium sulfate component.

(Raw material ash preparation step)

As shown in FIG. 1A, in the production method for a vanadium compound according to the first embodiment, first, combustion ash (raw material ash) is prepared (step 10). In this step, the above-described raw material ash is used as it is, or a raw material ash slurry is obtained by dissolving the above-described raw material ash in a solvent such as water or the like and is used as raw material ash. The components contained in the raw material ash in this case are as shown in FIG. 1B (step 10).

In this embodiment, the raw material ash contains at least an ammonium sulfate component, sulfuric acid, vanadium, and at least one other metal selected from nickel, iron, and magnesium. The ammonium sulfate component is composed of ammonium sulfate (($NH_4)_2SO_4$) and/or ammonium hydrogen sulfate ($NH_4HSO_4$). The amount of the ammonium sulfate component contained in the raw material ash is usually about 20 to 60 mass% and more generally about 30 to 50% in mass ratio. Examples of waste containing a large amount of an ammonium sulfate component include petroleum-based combustion ash and the like. The amount of the sulfuric acid contained in the raw material ash is about 1 to 20 mass% (wt%) and more generally about 5 to 10 mass%.

The vanadium contained in the raw material ash is in the form of compounds having various valences such as trivalent, tetravalent, and pentavalent compounds. Specifically, such compounds are $NH_4V_3(OH)_6(SO_4)_2$, $VOSO_4 \cdot 5H_2O$, $V_2O_5$, and the like. The amount of the vanadium contained in the raw material ash is generally about 0.1 to 30 mass% and more generally about 1 to 10 mass%.

The raw material ash contains, as a carbon component, water-insoluble solid matter (SS component) containing unburned carbon as a main component. The amount of the carbon component contained in the raw material ash is about 5 to 90 mass% and more generally about 30 to 70 mass% per dry matter.

In addition to these components, the raw material ash may contain other elements (metal impurities) other than vanadium, such as cobalt, molybdenum, manganese, titanium, copper, zinc, palladium, platinum, phosphorus, sulfur, and the like. Generally, these metal impurities are often contained as sulfuric acid salts, oxides, and the like. Generally, the amount of each of these metal impurities contained in the raw material ash is about 0.1 to 20 mass% and more generally about 1 to 10 mass%, although this depends on the type of element.

(Alkali extraction step)

Next, an alkali is added to the raw material ash (raw material ash itself or raw material ash slurry) to make the pH of the raw material ash 13 or higher and obtain an alkali leachate containing vanadium (step 12). Examples of the alkali used in this step include sodium hydroxide (NaOH), lithium hydroxide (LiOH), potassium hydroxide (KOH), rubidium hydroxide (RbOH), cesium hydroxide (CsOH), calcium hydroxide (Ca(OH)$_2$), strontium hydroxide (Sr(OH)$_2$), barium hydroxide (Ba(OH)$_2$), and the like. Among these alkalis, sodium hydroxide is preferable due to its easy availability and the like.

The temperature in the alkali extraction step is lower than the temperature in an evaporation concentration step described later, and is, for example, about 10 to 40°C and preferably 20 to 30°C. The alkali leachate after the addition of the alkali has a pH of 12.5 to 15 and preferably a pH of 13 to 14. When the pH of the alkali leachate is not lower than 13 and not higher than 14, vanadium can be easily selectively extracted into the alkali leachate. The concentration of the alkali contained in the alkali leachate depends on the concentration ratio in the evaporation concentration step described later, and is preferably in the range of 10 mass%/concentration ratio to 25 mass%/concentration ratio. For example, in case that the concentration ratio is 5 times (reduced in volume to 1/5), the concentration of the alkali contained in the alkali leachate is preferably 2 to 5 mass%.

(Solid-liquid separation step)

Next, the insoluble matter is removed as a solid component from the alkali leachate, and a leach filtrate containing vanadium is obtained (step 13). The separation method is not particularly limited, and examples thereof include precipitation separation, centrifugation, suction filtration, and the like. The components contained in the raw material ash after this step are those as shown in FIG. 1B (step 13) in which the carbon component is removed, and the ammonium sulfate component, sulfate ions, vanadium, and the alkali are contained in the leach filtrate.

(Solid component washing step)

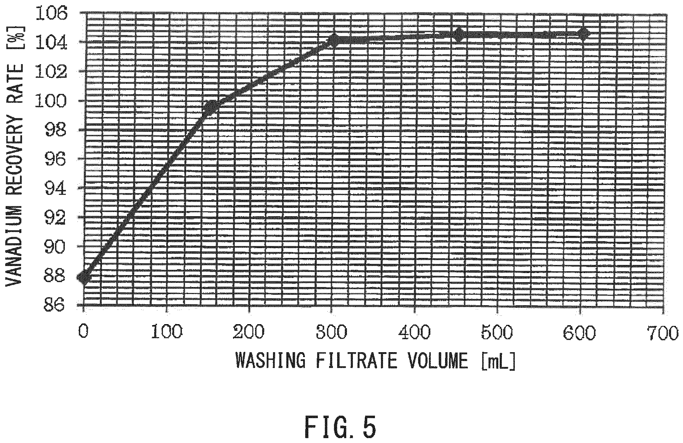

After the solid-liquid separation step, a step (solid component washing step) of washing the solid component (cake) is preferably performed. In the solid component washing step, washing is performed by adding washing water whose amount is 1 to 3 times the amount of water (solid component-contained water) contained in the solid component. Through this step, vanadium can be extracted and recovered from the solid component-contained water into the washing water. This is because the solid component after the alkali extraction step has a high pH, and thus the cake washing water also has a high pH of about 12 to 13, so that the vanadium in the solid component comes into a solution state and can be recovered through solid component washing. Furthermore, the washing liquid (washing filtrate) obtained in the solid component washing step is recovered and transferred to the next evaporation concentration step together with the leach filtrate. As shown in FIG. 5, whereas the recovery rate of vanadium is 88% when the washing liquid is not recovered (the volume of the washing filtrate is 0 mL), the recovery rate of vanadium is a high recovery rate of 100% or higher when the washing liquid is recovered. The amount of the washing water may be controlled by monitoring the pH and electrical conductivity of the cake washing water.
As described above, in this production method, the vanadium contained in the solid component can be recovered by washing the solid component and recovering the washing liquid containing vanadium, so that the recovery rate of vanadium can be increased. On the other hand, Patent Literature 2 does not describe solid component washing. In addition, in Patent Literature 2, since alkali leaching is performed at a pH of 9 or lower, even if solid component washing is performed, washing is performed at a pH near the neutral point, so that new extraction of vanadium cannot be expected, and a large amount of metal impurities such as nickel and the like may instead be leached as shown in FIG. 4.

(Evaporation concentration step)

Next, the leachate filtrate is evaporated and concentrated to obtain a concentrated liquid having an alkali concentration of 10 to 25 mass% (step 14). For example, in case that this alkali is sodium hydroxide, the leachate filtrate is preferably concentrated such that the concentration of sodium hydroxide in the concentrated liquid is 10 to 25 mass%. The evaporation concentration method is not particularly limited, but evaporation concentration can be performed using an evaporation concentration can or the like. The evaporation concentration temperature is preferably 70 to 130°C, although this depends on the salt concentration of the leach filtrate. If the evaporation concentration temperature is higher, the amount of input energy required for concentration increases, and the processing cost increases. The processing is preferably performed at a temperature of 100°C or lower, particularly 80 to 90°C by evaporation under reduced pressure
The evaporation concentration step is preferably performed under reduced pressure. The ratio (concentration ratio) of the volume of the leach filtrate before the evaporation concentration step to the volume of the leach filtrate after the evaporation concentration step is usually about 2 to 8 times and more preferably 4 to 6 times. As shown in FIG. 1B (step 14), in this embodiment, the volume of the leach filtrate is reduced to 1/5 in this step, and the ammonium sulfate component, sulfate ions, vanadium, and the alkali are contained in the leach filtrate. The evaporated water may be recovered and used as adjusting water in the alkali extraction step, or may be used as washing water in a raw material ash washing step in the second embodiment described later.

(Crystallization/solid-liquid separation step)

Next, the concentrated liquid is cooled and crystallized, and a precipitate containing a vanadium compound is recovered as a solid component (step 15). The cooling temperature is preferably 0 to 20°C, and the concentrated liquid obtained in the previous step is preferably cooled to 0 to 20°C. Examples of the crystallization method include methods using a water tank having a cooling function, a cooling crystallization tank, a poor solvent crystallization tank to which an organic poor solvent such as methanol or the like is added, and the like. After the crystallization, solid-liquid separation is performed. Examples of the solid-liquid separation method include methods using a thickener, a decanter, a basket centrifugal vacuum belt filter, and the like. As shown in FIG. 1B, in this embodiment, parts of the ammonium sulfate component, an alkali sulfate (sodium sulfate ($Na_2SO_4$: mirabilite) in the present embodiment), and the vanadium compound ($Na_3VO_4$ or the like) precipitate as a solid component, and the rest of these components and the alkali (NaOH) are contained in a crystallization filtrate.
The solid component is recovered as a purified vanadium raw material containing the vanadium compound as a main component (step 17), and is used for the production of a redox flow electrolyte, and the like. Since the crystallization filtrate in this step contains the alkali and unrecovered vanadium, the crystallization filtrate is returned to the alkali extraction step (step 12) and recycled as necessary. By reusing, in the alkali extraction step, the alkali contained in the crystallization filtrate, vanadium can be produced at a lower cost and a higher recovery rate.

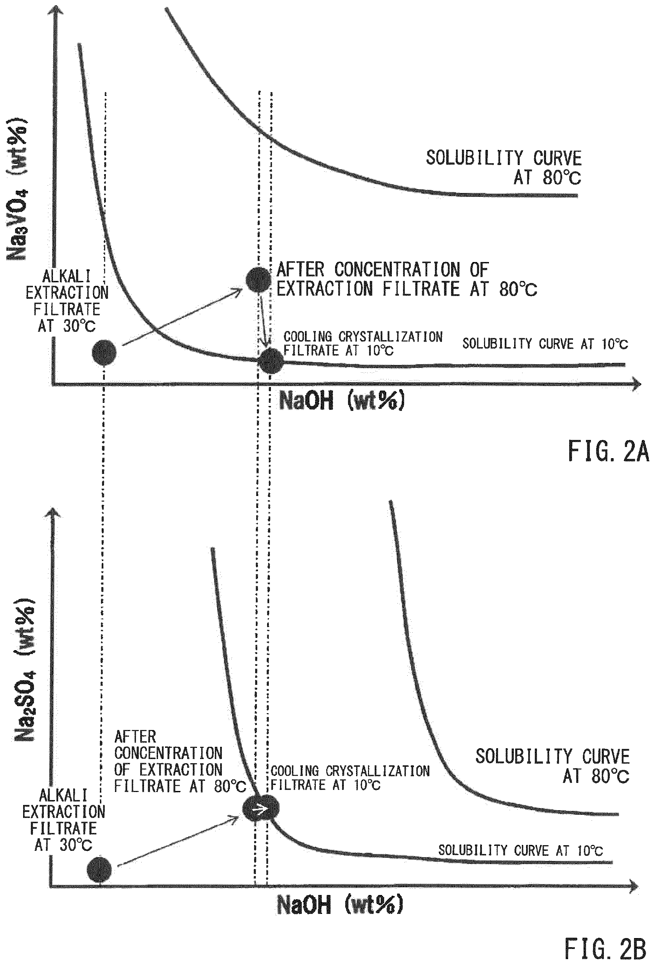

Here, the mechanism by which the vanadium compound is selectively separated in the evaporation concentration step and the crystallization/solid-liquid separation step in the production method according to the first embodiment, will be described. FIG. 2 shows graphs showing solubility curves of sodium orthovanadate ($Na_3VO_4$) and sodium sulfate ($Na_2SO_4$: mirabilite) at different temperatures and alkali concentrations. FIG. 2A shows the solubility curves of sodium orthovanadate, and FIG. 2B shows the solubility curves of sodium sulfate.

As shown in these figures, the higher the temperature is, the higher the solubility of each compound is. In addition, the solubility of each compound depends on the alkali concentration (NaOH concentration), and as the alkali concentration increases, the solubility decreases and becomes almost constant.

In FIG. 2, the compositions of $Na_3VO_4$ and $Na_2SO_4$ contained in the alkali leachate (in the case of 30°C) are each indicated by "alkali extraction filtrate at 30°C" in the graph thereof. When the alkali leachate is evaporated and concentrated at 80°C, $Na_3VO_4$, $Na_2SO_4$, and the alkali (NaOH) remain in the liquid, and thus the changes in concentration thereof are represented by straight lines passing through the origin. The temperature of the concentrated liquid after the concentration is 80°C, and the compositions of $Na_3VO_4$ and $Na_2SO_4$ contained therein are each indicated by "after concentration of extraction filtrate at 80°C" in the graph thereof. FIG. 2 is an example of being concentrated at 5 times. If this concentration is lower than the saturation solubility at 80°C (below the solubility curve), precipitation of solid matter does not occur at that time. Next, when the concentrated liquid is cooled to 10°C in the crystallization/solid-liquid separation step, as a result, the concentrated liquid has the composition of a saturated solution at 10°C, and the components exceeding the saturation concentrations thereof precipitate and are recovered as a solid component (cake). The compositions of $Na_3VO_4$ and $Na_2SO_4$ contained therein are each indicated by "cooling crystallization filtrate at 10°C" in the graph thereof.

Here, as for the concentration equivalent to the concentrated liquid which is calculated from the component concentration of the alkali leachate, when the concentration of $Na_3VO_4$ is not less than the saturation concentration thereof and the concentration of $Na_2SO_4$ is not greater than the saturation concentration thereof at the temperature (for example, 10°C) in the crystallization/solid-liquid separation step, a higher-purity $Na_3VO_4$ precipitate containing no crystals of $Na_2SO_4$ can be recovered.

Furthermore, in the above, if crystallization treatment is performed in a region where the $Na_3VO_4$ saturation concentration approaches zero and is close to the lower limit, it is possible to recover the vanadium compound in a higher yield, and if crystallization is performed in a region where the $Na_2SO_4$ saturation concentration does not approach zero and higher solubility is exhibited, it is possible to stably recover a higher-purity vanadium compound. As for such conditions, preferably, by performing concentration at 2 to 7 times with $SO_4$ in the alkali leachate being not greater than 0.6 mass%, the alkali concentration of the concentrated liquid is caused to be 10 to 25 mass%, the $Na_2SO_4$ saturation concentration is caused to be 4 to 7 mass%, and the $Na_3VO_4$ saturation concentration is caused to be 0 to 2 mass%.

(Modification)

At a stage previous to the alkali extraction step, an oxidizing step of oxidizing the raw material ash may be further included. Examples of the oxidizing method include a method of adding an oxidizing gas and/or an oxidizing agent to the raw material ash. Examples of the oxidizing gas include air, oxygen, ozone, nitrous oxide, nitric oxide, nitrogen dioxide, chlorine, and the like. Examples of the oxidizing agent include hydrogen peroxide, hypochlorous acid, and the like. In the raw material ash, the vanadium is in the form of compounds having various valences such as trivalent, tetravalent, and pentavalent compounds. In the alkali extraction step, generally, pentavalent vanadium is selectively dissolved in the alkali leachate, and trivalent vanadium, tetravalent vanadium, and metal impurities are hardly dissolved therein. Therefore, by adding the oxidizing step to convert trivalent or tetravalent vanadium into pentavalent vanadium and then performing the alkali extraction step, it is possible to improve the recovery rate of vanadium.

(Production method for redox-flow battery electrolyte)

The production method for a redox-flow battery electrolyte according to the present invention is a method for preparing a stock solution for a redox-flow battery electrolyte from the vanadium compound produced by the production method for a vanadium compound according to the first embodiment. The production method for a redox-flow battery electrolyte includes an electrolyte production step which is a step of producing a redox-flow battery electrolyte from the vanadium raw material produced by the above-described production method for a vanadium compound.

As the redox-flow battery electrolyte, vanadium(V) or vanadium(IV) is used on the positive electrode side, and vanadium(III) or vanadium(II) is used on the negative electrode side. In the method of the present invention, the vanadium is mainly recovered as vanadium(V) of sodium orthovanadate ($Na_3VO_4$) or the like, and thus is particularly suitable for use in the production of an electrolyte on the positive electrode side. However, the present invention is not limited thereto, and for example, the recovered vanadium(V) may be reduced to vanadium(III) or vanadium(II) and used for the production of an electrolyte on the negative electrode side. The concentration of the vanadium contained in the redox-flow battery electrolyte is not particularly limited, but can be, for example, in the range of 0.1 mol/l to 10 mol/l and preferably in the range of 1 to 3 mol/l on each of the positive electrode side and the negative electrode side.

(Production apparatus for vanadium compound)

The production apparatus for a vanadium compound according to the present invention can be configured as an apparatus for carrying out the production method for a vanadium compound according to the first embodiment described above. A production apparatus for a vanadium compound according to the present embodiment includes alkali extraction means, solid-liquid separation means, evaporation concentration means, and crystallization/solid-liquid separation means.

The alkali extraction means is means for carrying out the alkali extraction step of the first embodiment, and adds an alkali to raw material ash such that the raw material ash has a pH of 13 or higher and preferably has a pH of 14 or lower, to obtain an alkali leachate containing vanadium. Examples of the alkali extraction means include a stirring and mixing tank for mixing the alkali solution and the raw material ash, and the like.

The solid-liquid separation means is means for carrying out the solid-liquid separation step of the first embodiment, and performs solid-liquid separation on the alkali leachate to remove insoluble matter such as carbon and the like as a solid component and obtain a leach filtrate containing vanadium. Examples of the solid-liquid separation means include a dehydrator which separates the solid component from the alkali leachate, and the like.

The solid component washing means is means for carrying out the solid component washing step of the first embodiment, and washes the solid component (cake) after the solid-liquid separation. By washing the solid component with the solid component washing means and recovering a washing liquid containing vanadium, the vanadium contained in the solid component can be recovered, so that the recovery rate of vanadium can be increased. Examples of the solid component washing means include a combination of a water tank for adding water and a dehydrator, such as a vacuum belt filter for solid-liquid separation, a basket-type centrifuge, and a decanter, and the like. In addition, the solid component washing means may be means for sprinkling water onto a vacuum belt filter without using a water tank for adding water.

The evaporation concentration means is means for carrying out the evaporation concentration step of the first embodiment, and evaporates and concentrates the leach filtrate at 70 to 100°C to obtain a concentrated liquid having an alkali concentration of 10 to 25 mass%. For example, in case that the alkali is sodium hydroxide, the leach filtrate is preferably concentrated by the evaporation concentration means such that the concentration of sodium hydroxide in the concentrated liquid is 10 to 25%. Examples of the evaporation concentration means include an evaporation concentration can, an RO membrane separator, and the like.

The crystallization/solid-liquid separation means is means for carrying out the crystallization/solid-liquid separation step of the first embodiment, and cools the concentrated liquid to 0 to 20°C to crystallize the concentrated liquid and recovers a precipitate containing a vanadium compound, as a solid component. The crystallization/solid-liquid separation means includes crystallization means and solid-liquid separation means. Examples of the crystallization means include a water tank having a cooling function, a cooling crystallization tank, a poor solvent crystallization tank to which an organic poor solvent such as methanol or the like is added, and the like. Examples of the solid-liquid separation means include a thickener, a decanter, a basket centrifugal vacuum belt filter, and the like.

The production apparatus for a vanadium compound may further include oxidizing means for oxidizing the raw material ash at a stage previous to the alkali extraction means. Examples of the oxidizing means include an air diffuser for passing an oxidizing gas, and the like. By including the oxidizing means for the raw material ash as described above, a vanadium compound having a high valence is generated before the alkali extraction. Accordingly, the extraction recovery rate of vanadium can be improved.

(Production apparatus for redox-flow battery electrolyte)

The production apparatus for a redox-flow battery electrolyte according to the present invention is an apparatus for preparing a stock solution for a redox-flow battery electrolyte from the vanadium compound produced by the production apparatus for carrying out the production method for a vanadium compound according to the first embodiment. The production apparatus for a redox-flow battery electrolyte includes electrolyte production means which is a step of producing a redox-flow battery electrolyte from the vanadium raw material produced by the above-described production apparatus for a vanadium compound. For the details of the production apparatus for a redox-flow battery electrolyte, reference can be made to the above-described production method for a redox-flow battery electrolyte.

2. Second embodiment

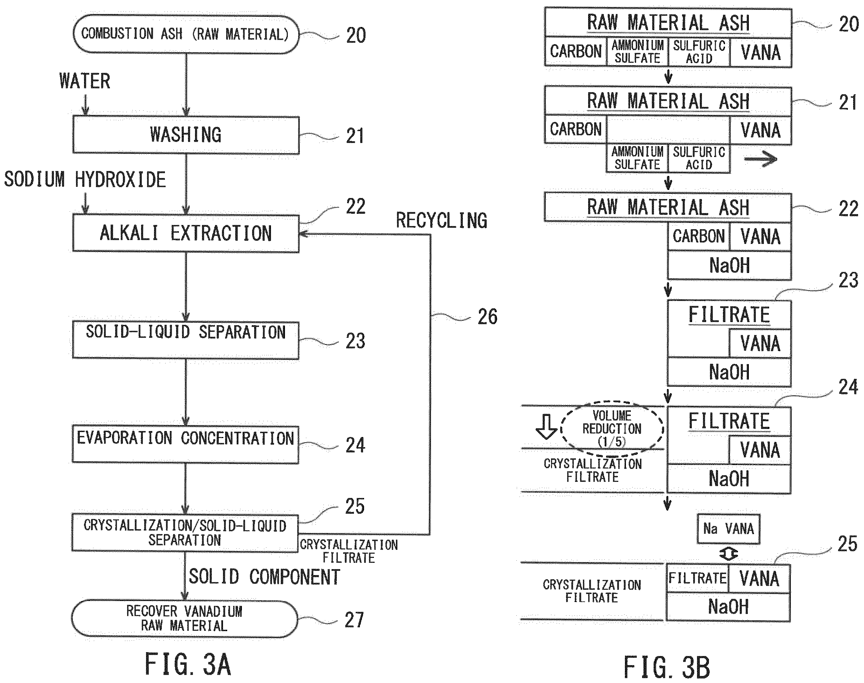

Hereinafter, the second embodiment of the present invention will be described with reference to FIG. 3. FIG. 3 shows a production method for a vanadium compound according to the second embodiment of the present invention, FIG. 3A is a flowchart of the production method for a vanadium compound, and FIG. 3B is a schematic diagram showing the transition of components in each step of FIG. 3A. The meanings of the terms in FIG. 3B are the same as the meanings of the terms described above for FIG. 1B.

The production method for a vanadium compound according to the second embodiment of the present invention includes a raw material ash preparation step (step 20), a raw material ash washing step (step 21), an alkali extraction step (step 22), a solid-liquid separation step (step 23), an evaporation concentration step (step 24), a crystallization/solid-liquid separation step (step 25), and a recycling step (step 26). Of these steps, the steps other than the raw material ash washing step (step 21) and the recycling step (step 26) are the same as those in the first embodiment described above, and thus the description thereof is omitted or simplified.

(Raw material ash washing step)

In the present embodiment, after the raw material ash preparation step (step 20), the raw material ash washing step (step 21) of washing the raw material ash is performed. In this step, soluble metal impurities (iron, nickel, magnesium, and the like) are removed from the raw material ash, and soluble salts (ammonium sulfate component, sulfuric acid, and the like) which hinder the reuse of the alkali are also removed therefrom. Examples of a solvent used for washing the raw material ash include water and an alkali solution. In the raw material ash washing step, the raw material ash is preferably washed with a solvent whose amount is 2 to 20 times in mass ratio to the raw material ash.

The method for washing the raw material ash may be a batch method or a continuous method. A specific example thereof is a method using a combination of a water tank for adding washing water and a dehydrator such as a vacuum belt filter for solid-liquid separation, a basket-type centrifuge, and a decanter. Alternatively, a method of sprinkling water onto a vacuum belt filter without using a water tank for adding washing water may be used. The washing temperature is preferably 10 to 40°C and more preferably 20 to 30°C. The washing time depends on the washing method, but is generally about 1 second to 60 minutes and preferably about 1 to 30 minutes.

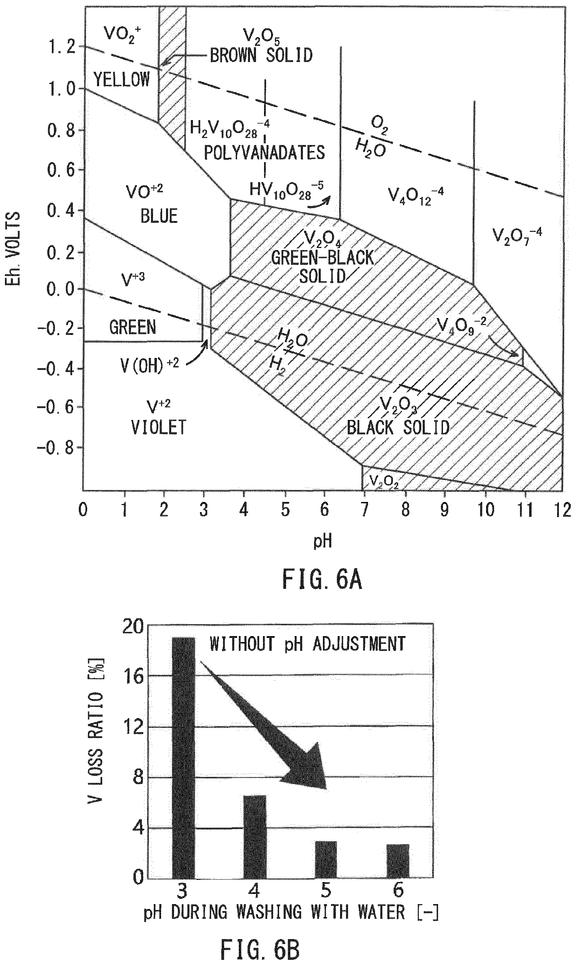

Moreover, in the raw material ash washing step, the pH of the raw material ash aqueous solution during washing is set to 4 to 7 and preferably 5 to 6 in order to prevent vanadium from being leached during washing with water. Hereinafter, the fact that this pH is preferable will be described. FIG. 6A is a Pourbaix diagram showing changes in the state of vanadium due to pH and redox potential, and FIG. 6B is a graph showing changes in the ratio of vanadium washing loss due to pH adjustment during washing with water. From the Pourbaix diagram of FIG. 6A, whereas the stable state of vanadium is ions such as $VO^{2+}$ and the like in a lower pH region where the pH is 3 or lower, the stable state of vanadium is a solid such as $V_2O_4$ and the like in a higher pH region where the pH is 4 to 7. Therefore, in the raw material ash washing step, by setting the pH to 4 to 7, vanadium is made solid and becomes less likely to be leached as vanadium ions into the washing liquid, whereby impurities can be efficiently removed while reducing loss during washing. In fact, as shown in FIG. 6B, when the pH of the raw material ash aqueous solution is not adjusted during washing, the pH becomes as low as 3, and the vanadium loss becomes larger. On the other hand, it can be seen that when the pH of the raw material ash aqueous solution is adjusted to 4, 5, or 6, the vanadium loss is smaller than that when the pH is not adjusted.

In this step, after the solid-liquid separation step, washing is preferably performed until the content of soluble components (soluble metal impurities and soluble salts) in the raw material ash becomes 5 mass% or less. In the present embodiment, since the raw material ash washing step is included at the stage previous to the alkali extraction step, the amounts of the ammonium sulfate component and the sulfuric acid contained in the raw material ash can be significantly reduced as shown in FIG. 3B. By washing the raw material ash at the stage previous to the alkali extraction step as described above, the amounts of the ammonium sulfate component and the sulfuric acid can be considerably reduced, and the concentration of the alkali sulfate such as sodium sulfate (mirabilite) and the like in the liquid can be maintained to be less than the saturation concentration thereof even if evaporation concentration and cooling crystallization are performed. Therefore, the solid component obtained in the crystallization/solid-liquid separation step contains almost no ammonium sulfate component or alkali sulfate, and a higher-quality vanadium compound can be obtained.

In the second embodiment, next to the raw material ash washing step, the alkali extraction step (step 22), the solid-liquid separation step (step 23), the evaporation concentration step (step 24), and the crystallization/solid-liquid separation step (step 25) are sequentially performed. Here, as shown in FIG. 3B, in the present embodiment, since the amounts of the ammonium sulfate component, the sulfuric acid, and the like are significantly reduced from the raw material ash by the raw material ash washing step, the amounts of the ammonium sulfate component, the sulfuric acid, and the like remaining in the alkali leachate, the leach filtrate, and the concentrated liquid in the subsequent steps are reduced. As a result, the precipitate obtained in the crystallization/solid-liquid separation step substantially does not contain these impurities, and contains substantially only the vanadium compound and the alkali.

(Recycling step)

In this embodiment, at a stage subsequent to the crystallization/solid-liquid separation step, the crystallization filtrate obtained in the
crystallization/solid-liquid separation step is recycled in the alkali extraction step. The crystallization filtrate contains the alkali and unrecovered vanadium. By returning this crystallization filtration to the alkali extraction step, the yield of the obtained vanadium compound is improved.

The crystallization filtrate may be returned by a return pump, an overflow tank, or the like. In this case, the entire amount of the crystallization filtrate may be reused as an alkali solution in the alkali extraction step, but in order to suppress the accumulation of sulfate ion in the system, preferably, the obtained crystallization filtrate is discharged in the range of 1 to 30 mass% to the outside of the system, and the rest of the crystallization filtrate is used.

In the present embodiment, since impurities such as the ammonium sulfate component and the sulfuric acid are removed in the raw material ash washing step, the precipitate obtained in the crystallization/solid-liquid separation step (step 25) substantially does not contain these impurities. Therefore, a higher-quality vanadium raw material can be obtained as compared with the method of the first embodiment.

Moreover, since these impurities are removed in the raw material ash washing step, the boiling point of the alkali extract is lower than that in case that the impurities are contained as in the first embodiment. Therefore, evaporation concentration can be performed at a lower temperature in the evaporation concentration step. Therefore, as compared with the first embodiment, large input energy is not required in the evaporation concentration step, so that the production cost of the vanadium raw material can be reduced.

Furthermore, the crystallization filtrate obtained in the crystallization/solid-liquid separation step (step 25) also contains almost no impurities, and contains substantially only the vanadium compound and the alkali. Therefore, as compared with the method of the first embodiment, the amount of the alkali to be inputted can be reduced, and the recovery rate of vanadium from the raw material ash can be increased.

By performing the raw material ash washing step as described above, a higher-quality vanadium raw material can be obtained. Specifically, the content of the vanadium compound ($Na_3VO_4$ or the like) contained in the precipitate (solid component) obtained in the crystallization/separation step can be 30 to 40 mass%. In addition, based on dry matter obtained by drying the solid component, the content of $Na_3VO_4$ can be 70 to 80 mass%, the content of $Na_2SO_4$ can be 2 to 5 mass%, and the content of NaOH can be 20 to 25 mass%. Furthermore, when a solid component washing step of washing the solid component with water or the like after the crystallization/separation step is provided, the content of $Na_3VO_4$ can be 90 mass% or higher based on the dry matter.

Moreover, the concentration of the salt contained in the crystallization filtrate in the crystallization/separation step can be reduced to 15 to 20 mass%. Furthermore, the amount of energy required for the evaporation concentration step can be 14000 kcal or less per 1 kg of pure vanadium.

(Crystallization filtrate amount adjustment step)

In the recycling step, the amount of the crystallization filtrate to be recycled is preferably adjusted such that the total of the sulfate ion brought in by the crystallization filtrate and the sulfate ion brought in from the raw material ash in the alkali extraction step is not greater than the amount equivalent to the saturation concentration after cooling in the crystallization/solid-liquid separation step. By doing so, a higher-purity vanadium compound containing no crystals of the alkali sulfate can be recovered.

(Production apparatus for vanadium compound)

The production apparatus for a vanadium compound according to the present invention can be configured as an apparatus for carrying out the production method for a vanadium compound according to the second embodiment described above. A production apparatus for a vanadium compound according to the present embodiment includes raw material ash washing means, alkali extraction means, solid-liquid separation means, evaporation concentration means, crystallization/solid-liquid separation means, recycling means, and crystallization filtrate amount adjustment means. Of these means, the alkali extraction means, the solid-liquid separation means, the evaporation concentration means, and the crystallization/solid-liquid separation means have been described above in the first embodiment, and thus the description thereof is omitted.

The raw material ash washing means is means for carrying out the raw material ash washing step of the second embodiment. Examples of the raw material ash washing means for washing the raw material ash include a combination of a water tank for adding water and a dehydrator, such as a vacuum belt filter for solid-liquid separation, a basket-type centrifuge, and a decanter, and the like. In addition, the raw material ash washing means may be means for sprinkling water onto a vacuum belt filter without using a water tank for adding water. By washing the raw material ash with the raw material ash washing means at the stage previous to the alkali extraction means as described above, the amounts of the ammonium sulfate component and the sulfuric acid can be considerably reduced, and the concentration of the alkali sulfate such as sodium sulfate (mirabilite) and the like in the liquid can be maintained to be less than the saturation concentration thereof even if evaporation concentration and cooling crystallization are performed. Therefore, the solid component obtained by the crystallization/solid-liquid separation means contains almost no ammonium sulfate component or alkali sulfate, and a higher-quality vanadium compound can be obtained.

The recycling means is means for carrying out the recycling step of the second embodiment, and reuses, in the alkali extraction means, a crystallization filtrate separated from a solid component by the crystallization/solid-liquid separation means. Examples of the recycling means include a return pump, an overflow tank, and the like. By reusing the alkali contained in the filtrate separated from the solid component by the crystallization/solid-liquid separation means in the alkali extraction means by using the recycling means as described above, vanadium separation can be performed at a lower cost and a higher recovery rate.

The crystallization filtrate amount adjustment means is means for carrying out the crystallization filtrate amount adjustment step in the recycling step of the second embodiment, and adjusts the amount of the crystallization filtrate to be recycled, such that the total of the sulfate ion brought in by the crystallization filtrate and the sulfate ion brought in from the raw material ash in the alkali extraction step is not greater than the amount equivalent to the saturation concentration after cooling in the crystallization/solid-liquid separation step. By including the crystallization filtrate amount adjustment means as described above, a higher-purity vanadium compound containing no crystals of the alkali sulfate can be recovered.

3. Third embodiment

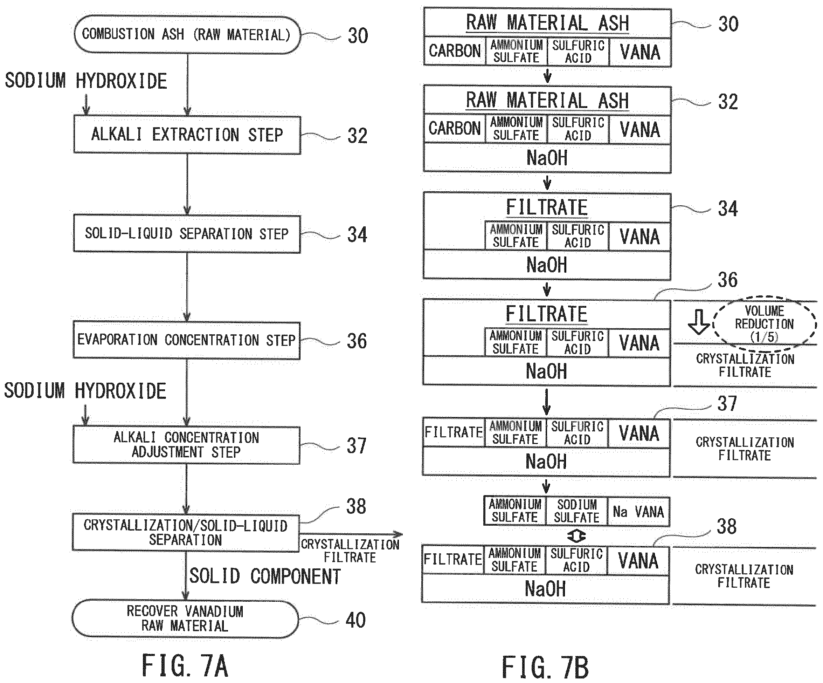

Hereinafter, the first embodiment of the present invention will be described with reference to FIG. 7. FIG. 7 shows a production method for a vanadium compound according to the third embodiment of the present invention, FIG. 7A is a flowchart showing steps of the production method for a vanadium compound, and FIG. 7B is a schematic diagram showing the transition of components in each step of FIG. 7A. The meanings of the terms in FIG. 7B are the same as the meanings of the terms described above for FIG. 1B.

As shown in FIG. 7A, in this embodiment, first, combustion ash is prepared as raw material ash (step 30). Subsequently, an alkali extraction step (step 32), a solid-liquid separation step (step 34), an evaporation concentration step (step 36), an alkali concentration adjustment step (step 37), and a crystallization/solid-liquid separation step (step 38) are sequentially performed, and a vanadium compound is recovered. Although not shown, the recovered vanadium compound is used as a raw material in a production method for a redox-flow battery electrolyte described later. Hereinafter, each step will be described in detail, but the description is omitted or simplified for the portion that overlaps with that of the first or second embodiment described above.

(Preparation step: step 30)

As described above, in this preparation step, combustion ash is prepared (step 30). The combustion ash may be used as it is as raw material ash, or a slurry may be obtained by dissolving the combustion ash in a solvent such as water or the like, and used as raw material ash.

The raw material ash prepared in the third embodiment contains at least an ammonium sulfate component, sulfuric acid, and vanadium. As shown in FIG. 7B (step 30), the components contained in the raw material ash (combustion ash) in this embodiment are carbon, ammonium sulfate, sulfuric acid, and vanadium. The details of the carbon, the ammonium sulfate, the sulfuric acid, and the vanadium are the same as those described above in the first embodiment.

Although not shown, the raw material ash may contain other elements (metal impurities) other than vanadium. Examples of such impurities include iron, magnesium, nickel, cobalt, molybdenum, manganese, titanium, copper, zinc, palladium, platinum, phosphorus, sulfur, and the like. Generally, these metal impurities are often contained as sulfides and the like. The amount of each of these metal impurities contained in the raw material ash is about 0.1 to 20 mass% and more generally about 1 to 10 mass%, although this depends on the type of element.

(Alkali extraction step: step 32)

In the alkali extraction step, an alkali and water, or an alkali solution, is added to the raw material ash (raw material ash itself or raw material ash slurry) in an amount that achieves a pH of 13 or higher, to leach vanadium into the liquid phase to obtain an alkali leachate containing vanadium (step 32). By setting the pH of the alkali leachate to 13 or higher, the vanadium and/or vanadium compound in the raw material ash is selectively extracted. The pH is preferably not lower than 13 and not higher than 15, and more preferably not lower than 13 and not higher than 14.

In the third embodiment, it is sufficient that the alkali is added in an amount that allows the obtained alkali leachate to have a pH of 13 or higher, and the addition amount thereof is adjusted as appropriate according to the type and amount of the raw material ash. In other words, in the alkali extraction step of this embodiment, the addition amount of the alkali is adjusted to the minimum amount that allows selective extraction of the vanadium and/or vanadium compound. The addition amount of the alkali is adjusted such that the boiling point of the obtained alkali leachate is increased by preferably 5°C or lower and more preferably 1°C or lower. By adjusting the addition amount of the alkali in the alkali extraction step described above, the energy burden caused by an increase in the boiling point is reduced in the evaporation concentration step described later, so that problems such as scaling are avoided.

The alkali used in this step is not particularly limited, but the hydroxide of an alkali metal or an alkali earth metal is preferable. The alkali described above in the first embodiment can be used. Sodium hydroxide is preferable due to its easy availability and the like.

The concentration of the alkali contained in the alkali leachate varies depending on the type of the alkali used. In case that sodium hydroxide is used as the alkali, the concentration of the alkali in the alkali leachate is preferably not less than 0.5 mass% and more preferably not less than 1.0 mass% from the viewpoint of selective extraction of vanadium. The concentration of the alkali is preferably not greater than 10 mass% and more preferably not greater than 3.0 mass% from the viewpoint of suppressing an increase in the boiling point and reducing production trouble.

The extraction temperature in the alkali extraction step influences the extraction efficiency, but in the production method according to this embodiment, selective extraction of vanadium is enabled by setting the pH of the alkali leachate to 13 or higher. Therefore, heat treatment at a high temperature is not required at the time of extraction. The extraction temperature in this embodiment is lower than the temperature in the evaporation concentration step described later, and is, for example, not lower than 10°C and lower than 50°C, preferably 10°C to 40°C, and more preferably 20°C to 30°C.

(Solid-liquid separation step: step 34)

In the solid-liquid separation step, solid-liquid separation is performed on the obtained alkali leachate to obtain a leach filtrate containing vanadium (step 34). As shown in FIG. 7B (step 32), the alkali leachate contains carbon, the ammonium sulfate component, sulfuric acid, vanadium, and the alkali (sodium hydroxide). In this step, the carbon, which is insoluble matter, is removed as a solid component. The components contained in the leach filtrate obtained in this step are the ammonium sulfate component, sulfuric acid, vanadium, and the alkali as shown in FIG. 7B (step 34).

In this embodiment, the method for performing solid-liquid separation on the alkali leachate is not particularly limited, and the method described above in the first embodiment can be used.

In the third embodiment, preferably, after this step, a solid component washing step of washing the solid component (cake) after the leach filtrate is separated is performed. The solid component washing step is as described above in the first embodiment. In this embodiment, washing water (washing filtrate) after washing the solid component is recovered, and is subjected to the next evaporation concentration step together with the leach filtrate, whereby the recovery rate of vanadium is improved.

(Evaporation concentration step: step 36)

In the evaporation concentration step, the leach filtrate containing vanadium is evaporated and concentrated to obtain a concentrated liquid (step 36). The evaporation concentration method is not particularly limited, and a multiple effect distillation type evaporation method (MED), a mechanical vapor recompression type evaporation method (MVR), a vapor compression distillation type evaporation method (VCD), a vacuum multi-stage evaporation concentration type evaporation method (VMEC), a multi-stage flash type evaporation method (MSF), or the like is appropriately selected and used. From the viewpoint of energy saving and cost, the mechanical vapor recompression type evaporation method (MVR) is preferable.

In this step, the volume of the leach filtrate is reduced by removing water as steam from the leach filtrate. As shown in FIG. 7B (step 36), in this embodiment, the volume of the leach filtrate is reduced to 1/5 in this step (concentration ratio: 5 times). The leach filtrate (concentrated liquid) reduced in volume contains the ammonium sulfate component, sulfate ions, vanadium, and the alkali. The evaporation concentration temperature, the concentration ratio, and the method for using the evaporated water in this step are as described above with respect to the first embodiment.

As described above, in the third embodiment, the addition amount of the alkali in the alkali extraction step is adjusted to the minimum amount that allows selective extraction of the vanadium and/or vanadium compound, and is adjusted to an amount that allows an increase in the boiling point to be preferably 5°C or lower and more preferably 1°C or lower. According to this production method, the energy burden caused by an increase in the boiling point is reduced in the evaporation concentration step, so that problems such as scaling are avoided.

The concentration of the alkali in the concentrated liquid obtained in this step varies depending on the addition amount of the alkali in the alkali extraction step and the concentration ratio. From the viewpoint of preventing scaling and the like during evaporation concentration, the concentration of the alkali in the concentrated liquid is preferably not greater than 10 mass% and more preferably not greater than 5 mass%.

(Alkali concentration adjustment step: step 37)

In the alkali concentration adjustment step, an alkali or an alkali solution is further added to the obtained concentrated liquid to obtain a concentration-adjusted liquid (step 37). In this step, the type of the alkali added to the concentrated liquid is not particularly limited, and the alkali described above in the alkali extraction step of the first embodiment can be used. The alkali added in this step and the alkali added in the alkali extraction step may be the same or different from each other. From the viewpoint of cost and an increase in the purity of the obtained vanadium compound, the same type of alkali as the alkali added in the alkali extraction step is preferably added. As shown in FIG. 7B (step 37), in this embodiment, sodium hydroxide is further added to the concentrated liquid.

In the production method according to the present invention, the alkali concentration of the concentration-adjusted liquid is adjusted such that at the cooling temperature in the crystallization/solid-liquid separation step described later, the concentration of the vanadium compound is not less than the saturation concentration thereof, and the concentration of an alkali sulfate is not greater than the saturation concentration thereof. By adjusting the alkali concentration of the concentration-adjusted liquid so as to satisfy this condition, the mixing of the alkali sulfate in a precipitate recovered in the crystallization/solid-liquid separation step described later is reduced, and an increase in the purity of the obtained vanadium compound is achieved. The effect of the alkali concentration on the amount of the alkali sulfate mixed in the precipitate will be described in detail in the crystallization/solid-liquid separation step later.

As long as the alkali concentration of the concentration-adjusted liquid satisfies this condition, the amount of the alkali or the alkali solution to be added to the concentrated liquid in this step is not particularly limited, and is adjusted as appropriate according to the type of the raw material ash, the alkali concentration of the concentrated liquid, the type of the alkali to be added, and the like.

(Crystallization/solid-liquid separation step: step 38)

In the crystallization/solid-liquid separation step, the obtained concentration-adjusted liquid is cooled to a predetermined cooling temperature to be crystallized, and a precipitate containing the vanadium compound is recovered as a solid component (also referred to as cake) (step 38). The cooling temperature, the crystallization method, and the solid-liquid separation method are as described above for the crystallization/solid-liquid separation step of the first embodiment.

In this step, parts of the ammonium sulfate component, the alkali sulfate, and the vanadium compound precipitate as a solid component. The crystallization filtrate separated from the solid component by solid-liquid separation contains the rest of these components and the alkali. As shown in FIG. 7B (step 38), in this embodiment, a part of sodium sulfate ($Na_2SO_4$: mirabilite) as the alkali sulfate and a part of sodium orthovanadate ($Na_3VO_4$) or the like as the vanadium compound, precipitate as a solid component, and the crystallization filtrate contains sodium hydroxide (NaOH) as the alkali.

As described above, the solubility of the vanadium compound and the alkali sulfate decreases when the alkali concentration of the concentration-adjusted liquid increases. According to the findings of the present inventors, there is an alkali concentration region where the solubility of the vanadium compound is extremely lower than the solubility of the alkali sulfate at the cooling temperature at the time of crystallization. In this embodiment, the precipitation of the alkali sulfate can be remarkably suppressed by adjusting the alkali concentration of the concentration-adjusted liquid used in this step, to be in this concentration region.

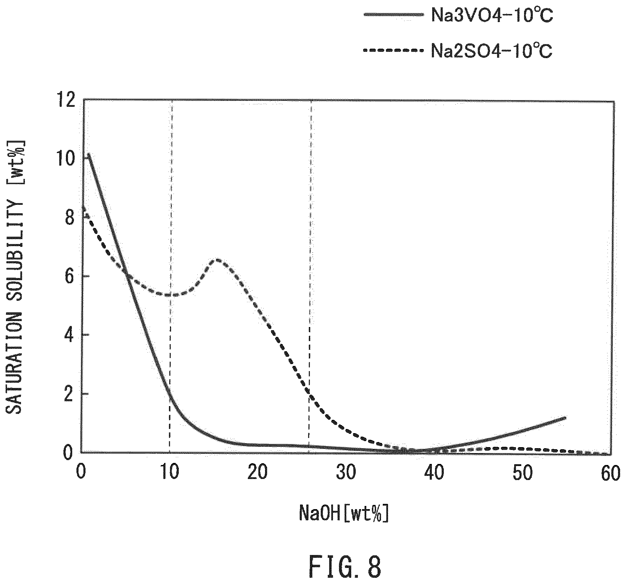

For example, the graph of FIG. 8 shows the saturation concentration (solid line) of $Na_3VO_4$ and the saturation concentration (dashed line) of $Na_2SO_4$ at different alkali concentrations. Each of $Na_3VO_4$ and $Na_2SO_4$ precipitates when the concentration thereof is not less than the saturation concentration thereof, and dissolves when the concentration thereof is not greater than the saturation concentration thereof. In other words, the solid line and the dashed line in FIG. 8 are the solubility curves of $Na_3VO_4$ and $Na_2SO_4$ at 10°C, respectively.

As shown, in case that NaOH is used as the alkali, in a concentration region where the alkali concentration is not less than 10 mass% and not greater than 25 mass%, whereas the solubility of the vanadium compound at 10°C approaches zero, the solubility of the alkali sulfate at 10°C is maintained in a higher range. Therefore, in this step, when the concentration-adjusted liquid whose alkali concentration is adjusted to be not less than 10 mass% and not greater than 25 mass% is cooled to 10°C, the vanadium compound predominantly precipitates as a solid component, but most of the alkali sulfate remains in the crystallization filtrate. Accordingly, a solid component having an extremely low content of the alkali sulfate, which is an impurity, and containing the vanadium compound with higher purity can be obtained. The obtained solid component is recovered as a purified vanadium raw material containing the vanadium compound as a main component (step 40), and is used for the production of a redox flow electrolyte and the like.

From the viewpoint of improving the recovery rate of the vanadium compound and suppressing the precipitation of the alkali sulfate, the alkali concentration of the concentration-adjusted liquid to be subjected to this step is preferably adjusted to be not less than 10 mass% and not greater than 25 mass%. From the viewpoint of improving the recovery rate of the obtained vanadium compound, the alkali concentration of the concentration-adjusted liquid is more preferably not less than 10 mass% and particularly preferably not less than 15 mass%. From the viewpoint of suppressing the precipitation of the alkali sulfate, the alkali concentration of the concentration-adjusted liquid is more preferably not greater than 30 mass% and particularly preferably not greater than 25 mass%.

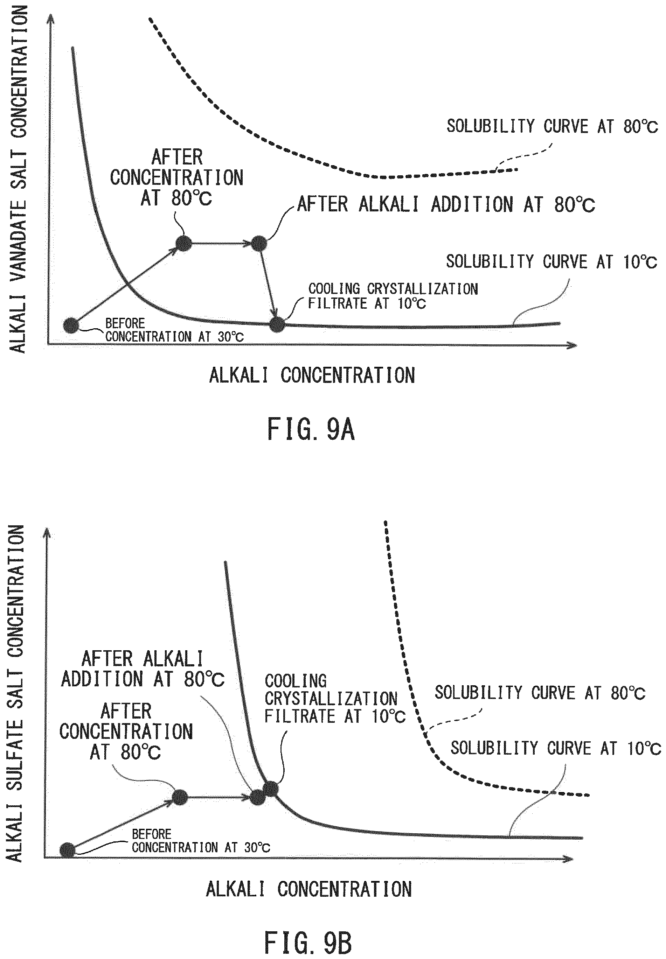

Next, the mechanism by which the vanadium compound is selectively separated in the evaporation concentration step to the crystallization/solid-liquid separation step, will be described using FIG. 9. FIG. 9A is a graph showing solubility curves of sodium orthovanadate ($Na_3VO_4$) at different temperatures and alkali concentrations, and FIG. 9B is a graph showing solubility curves of sodium sulfate ($Na_2SO_4$: mirabilite) at different temperatures and alkali concentrations. As shown, the higher the temperature is, the higher the solubility of each compound is. In addition, as the alkali concentration (NaOH concentration) increases, the solubility of each compound decreases and becomes almost constant.

In FIGS. 9A and 9B, the compositions of $Na_3VO_4$ and $Na_2SO_4$ contained in the alkali leachate (in the case of 30°C) are each indicated by "before concentration at 30°C". When the alkali leachate is evaporated and concentrated at 80°C, $Na_3VO_4$, $Na_2SO_4$, and the alkali (NaOH) remain in the liquid, and thus the changes in concentration thereof are represented by straight lines passing through the origin. The temperature of the concentrated liquid after the concentration is 80°C, and the compositions of $Na_3VO_4$ and $Na_2SO_4$ contained therein are each indicated by "after concentration at 80°C". FIGS. 9A and 9B are an example of being concentrated at 5 times. If this concentration is lower than the saturation solubility at 80°C (below the solubility curve), precipitation of solid matter does not occur at that time.

Then, the compositions of $Na_3VO_4$ and $Na_2SO_4$ in the concentration-adjusted liquid obtained by further adding the alkali to each concentrated liquid in the alkali concentration adjustment step are each indicated by "after alkali addition at 80°C". At this time, the addition amount of the alkali is adjusted such that the concentration of each compound is lower than the saturation solubility thereof at 80°C (that is, such that precipitation of solid matter does not occur). Next, when the concentration-adjusted liquid is cooled to 10°C in the crystallization/solid-liquid separation step, as a result, the concentration-adjusted liquid has the composition of the saturated solution at 10°C, and each component exceeding the saturation concentration thereof precipitates and is recovered as a solid component (cake). The compositions of $Na_3VO_4$ and $Na_2SO_4$ contained therein are each indicated by "cooling crystallization filtrate at 10°C".

As shown, the "cooling crystallization filtrate at 10°C" of $Na_3VO_4$ is located in a region where the solubility curve of $Na_3VO_4$ is asymptotic to zero and close to the lower limit, and the "cooling crystallization filtrate at 10°C" of $Na_2SO_4$ is located in a region where the solubility curve of $Na_2SO_4$ is not asymptotic to zero and higher solubility is exhibited. Accordingly, the vanadium compound is recovered in a higher yield, and the precipitation of the alkali sulfate is suppressed. Furthermore, by adjusting the alkali concentration of the concentration-adjusted liquid such that the concentration of the vanadium compound is not less than the saturation concentration thereof and the concentration of the alkali sulfate is not greater than the saturation concentration thereof at the cooling temperature in the crystallization/solid-liquid separation step, a solid component containing no alkali sulfate, which is an impurity, and containing the vanadium compound with higher purity can be recovered. Accordingly, it is possible to stably obtain a higher-purity vanadium compound.

With the production method according to this embodiment, the content of the vanadium compound in the solid component obtained in the crystallization/solid-liquid separation step can be 30 to 40 mass%. In addition, based on dry matter obtained by drying the solid component, the content of the vanadium compound can be 70 to 80 mass%, the content of the alkali sulfate can be 2 to 5 mass%, and the content of the alkali can be 20 to 25 mass%. Moreover, when a cake washing step of washing the solid component with water or the like after the crystallization/solid-liquid separation step is provided, the content of the vanadium compound can be 90 mass% or higher based on the dry matter.

Moreover, as described above, in the production method according to the third embodiment, by further adding an alkali or an alkali solution to the concentrated liquid obtained in the evaporation concentration step, the alkali concentration is adjusted such that at the above-described cooling temperature, the concentration of the vanadium compound is not less than the saturation concentration thereof and the concentration of the alkali sulfate is not greater than the saturation concentration thereof. In other words, the alkali concentration of the concentrated liquid obtained in the evaporation concentration step is lower than the alkali concentration at which the concentration of the vanadium compound is not less than the saturation concentration thereof and the concentration of the alkali sulfate is not greater than the saturation concentration thereof at the above-described cooling temperature. The feature of this production method is that the amount of the alkali to be added in the alkali extraction step is set such that the alkali concentration after evaporation concentration is lower than the alkali concentration at which the concentration of the vanadium compound is not less than the saturation concentration thereof and the concentration of the alkali sulfate is not greater than the saturation concentration thereof at the above-described cooling temperature. Accordingly, the alkali concentration of the leach filtrate to be subjected to the evaporation concentration step is reduced, and a significant increase in viscosity and boiling point is avoided, so that the energy burden required for evaporation concentration is reduced and the fluid handleability is improved. In addition, production trouble caused by the occurrence of scaling during evaporation concentration due to the alkali having a high concentration is avoided. Furthermore, the time and cost required for removing scale adhering to the apparatus, etc., are reduced.

(Other steps)

In the third embodiment, the production method may further include other steps unless the effects of the present invention are impaired. Examples of the other steps include a raw material ash washing step of washing the raw material ash after the preparation step and before the alkali extraction step, an oxidizing step of oxidizing the raw material ash after the preparation step and before the alkali extraction step, a recycling step of reusing the crystallization filtrate separated in the crystallization/solid-liquid separation step, in the alkali extraction step, and the like.

(Raw material ash washing step)

This step is a step of removing soluble metal impurities and soluble salts (ammonium sulfate component, sulfuric acid, and the like) from the raw material ash. For washing the raw material ash, water or an alkali solution is used, and the pH of the liquid during washing is adjusted to a pH of 4 to 7 and more preferably a pH of 5 to 6. Furthermore, it is preferable that the pH during washing does not exceed 6. The use of washing water whose amount is 2 to 20 times in mass ratio to the raw material ash is preferable. By washing the raw material ash before the alkali extraction step, the concentration of the salt in the leach filtrate to be subjected to the evaporation concentration step is reduced. Therefore, it is possible to perform evaporation concentration at a lower temperature, so that the energy consumption burden is reduced. Furthermore, in the crystallization/solid-liquid separation step, the amounts of the metal impurities, the alkali sulfate, and the like are reduced, and a cake containing the vanadium compound with higher purity can be obtained. From this viewpoint, the raw material ash is preferably washed until the content of soluble components (soluble metal impurities and soluble salts) in the raw material ash after the raw material ash washing step becomes 5 mass% or less. The washing method, the washing temperature, and the washing time for the raw material ash in this step are as described above in the second embodiment.

(Oxidizing step)

This step is a step of oxidizing the trivalent or tetravalent vanadium contained in the raw material ash into pentavalent vanadium. By performing the alkali extraction step after trivalent or tetravalent vanadium is converted into pentavalent vanadium in the oxidizing step, the recovery rate of vanadium is improved. The oxidizing method for the raw material ash and the types of an oxidizing gas and an oxidizing agent to be used are as described above as the modification of the first embodiment.

(Recycling step)

This step is a step of returning the crystallization filtrate obtained by solid-liquid separation after crystallization, to the alkali extraction step and reusing the crystallization filtrate as an alkali solution. Accordingly, the yield of the obtained vanadium compound is improved. The return method for and the return amount of the crystallization filtrate are as described above in the second embodiment.

(Production method for redox-flow battery electrolyte)

The production method for a redox-flow battery electrolyte according to the present invention is a method using the vanadium compound obtained by the production method for a vanadium compound according to the third embodiment described above, as a raw material of a redox-flow battery electrolyte. In this embodiment, a raw material ash preparation step (step 30), an alkali extraction step (step 32), a solid-liquid separation step (step 34), an evaporation concentration step (step 36), an alkali concentration adjustment step (step 37), a crystallization/solid-liquid separation step (step 38), and an electrolyte production step of producing a redox-flow battery electrolyte using a precipitate containing a vanadium compound as a raw material, are sequentially performed, whereby a redox-flow battery electrolyte is produced. The details of the redox-flow battery electrolyte are as described above in the first embodiment.

In the production method according to the present invention, production trouble that may occur during evaporation concentration can be avoided, and vanadium can be selectively separated at a lower cost more easily than in the conventional art. By using this vanadium compound as a raw material, a redox-flow battery electrolyte can be easily and efficiently produced at a lower cost.

(Production apparatus for vanadium compound)

The production apparatus for a vanadium compound according to the present invention can be configured as an apparatus for carrying out the production method for a vanadium compound according to the third embodiment described above. The production apparatus for a vanadium compound according to this embodiment includes alkali extraction means, solid-liquid separation means, evaporation concentration means, alkali concentration adjustment means, and crystallization/solid-liquid separation means.

The alkali extraction means is means for carrying out the alkali extraction step of the third embodiment described above, and adds an alkali and water, or an alkali solution, in an amount that achieves a pH of 13 or higher, to the raw material ash (raw material ash itself or raw material ash slurry), to leach vanadium into the liquid phase to obtain an alkali leachate containing vanadium. As the alkali extraction means, the alkali extraction means exemplified in the first embodiment can be used.

The solid-liquid separation means is means for carrying out the above-described solid-liquid separation step. As the solid-liquid separation means, the solid-liquid separation means exemplified in the first embodiment can be used.

The evaporation concentration means is means for carrying out the evaporation concentration step of the third embodiment described above, and evaporates and concentrates the leach filtrate containing vanadium to obtain a concentrated liquid. Examples of the evaporation concentration means include an evaporation concentration can and the like.

The alkali concentration adjustment means is means for carrying out the above-described alkali concentration adjustment step, and further adds an alkali or an alkali solution to the concentrated liquid to obtain a concentration-adjusted liquid. Examples of the alkali concentration adjustment means include a stirring and mixing tank for mixing the concentrated liquid and the alkali solution, and the like.

The crystallization/solid-liquid separation means is means for carrying out the crystallization/solid-liquid separation step of the third embodiment described above, and cools the concentration-adjusted liquid to a predetermined cooling temperature to crystallize the concentration-adjusted liquid and recovers a precipitate containing the vanadium compound, as a solid component (also referred to as cake). The crystallization/solid-liquid separation means includes crystallization means and solid-liquid separation means. As the crystallization means and the solid-liquid separation means, the crystallization means and the solid-liquid separation means exemplified in the first embodiment can be used.

In the production apparatus according to the third embodiment, by causing the alkali leachate to have a pH of 13 or higher by the alkali extraction means, vanadium can be selectively extracted in a higher yield without requiring means for heating at a high temperature. In addition, in the production apparatus, after the leach filtrate is concentrated by the evaporation concentration means, an alkali or an alkali solution is further added to the concentrated liquid by the alkali concentration adjustment means to adjust the concentrated liquid so as to have a predetermined alkali concentration. Since the alkali concentration of the leach filtrate at the time of evaporation concentration is low and a large increase in boiling point does not occur, the energy burden required for evaporation concentration can be reduced, and production trouble due to the occurrence of scaling or the like during evaporation concentration can also be avoided.

Furthermore, in this production apparatus, the alkali concentration is adjusted by the alkali concentration adjustment means such that, at the cooling temperature in the crystallization/solid-liquid separation step, the concentration of the vanadium compound is not less than the saturation concentration thereof and the concentration of the alkali sulfate is not greater than the saturation concentration thereof. In this production apparatus, the vanadium compound can be selectively precipitated and recovered on the basis of the difference in solubility between the vanadium compound and the alkali sulfate without requiring means for adding an acid as in the conventional art.

Unless the effects of the present invention are impaired, this production apparatus may further include: raw material ash washing means for washing the raw material ash with washing water; pH adjustment means for adjusting the pH of the washing water to 4 to 7; oxidizing means for oxidizing the raw material ash; temperature control means for, while leaching vanadium into the liquid phase by the alkali extraction means, controlling the temperature of the leaching to be not lower than 10°C and lower than 50°C; solid component washing means for washing a solid component (cake) separated by the solid-liquid separation means; recycling means for reusing a crystallization filtrate separated from the solid component by the crystallization/solid-liquid separation means, in the alkali extraction means; and the like.

(Production apparatus for redox-flow battery electrolyte)

The production apparatus for a redox-flow battery electrolyte according to the present invention is an apparatus for using the vanadium compound produced by the production apparatus for a vanadium compound according to the third embodiment described above, as a raw material of a redox-flow battery electrolyte. The production apparatus for a redox-flow battery electrolyte according to this embodiment includes alkali extraction means, solid-liquid separation means, evaporation concentration means, alkali concentration adjustment means, crystallization/solid-liquid separation means, and electrolyte production means for producing a redox-flow battery electrolyte using a precipitate containing a vanadium compound, as a raw material.

For the details of the alkali extraction means, the solid-liquid separation means, the evaporation concentration means, the alkali concentration adjustment means, and the crystallization/solid-liquid separation means, reference can be made to the above-described production apparatus for a vanadium compound. For the details of the production apparatus for a redox-flow battery electrolyte, reference can be made to the above-described production method for a redox-flow battery electrolyte.

With the production apparatus according to the third embodiment, production trouble that may occur during evaporation concentration can be avoided, and vanadium can be selectively separated at a lower cost more easily than in the conventional art. Furthermore, by avoiding production trouble and selectively separating vanadium easily at a lower cost, a redox-flow battery electrolyte can be easily and efficiently produced at a lower cost.

EXAMPLES

The following will show the effects of the present invention by means of examples, but the present invention should not be construed in a limited manner based on the description of these examples.

[Example 1]

(1) Preparation step and washing step
5 kg of wet boiler combustion ash (moisture content: 14.9%, vanadium(V) content: 2.3%) was used as a raw material, 10 kg of water was added thereto, the mixture was stirred for 60 minutes, and then solid-liquid separation was performed with a centrifugal dehydrator. The weight of the obtained residue was 4.5 kg (moisture content: 33 wt%). In this water washing step, 16.6 wt% of vanadium(V) contained in the raw material ash was leached into the filtrate.
(2) Alkali extraction step and solid-liquid separation step
2.1 kg of slurry water and 1.0 kg of 30 wt% caustic soda (NaOH) were added to 1 kg of the residue obtained in the water washing step to achieve a pH of 13.8, the mixture was stirred for 60 minutes, and then pressure filtration was performed to obtain 2.8 kg of a filtrate. The residue was cake-washed with 2.1 kg of water, and the washing liquid at that time was also recovered, thereby obtaining 4.8 kg of an alkali leachate in total.
(3) Evaporation concentration step
4.8 kg of the filtrate (liquid before concentration) obtained in the alkaline leaching step was concentrated under reduced pressure at 80 to 85°C and -70 kPa to obtain 1.0 kg of a concentrated liquid.
(4) Cooling crystallization step
1.0 kg of the concentrated liquid obtained in the evaporation concentration step was taken, cooled gradually, and stirred at 5°C for 5 hours to precipitate crystals. Solid-liquid separation was performed by suction filtration using a 1.0 $\mu$m membrane. As a result, 157 g of a cake I ($Na_3VO_4$: 64 g, vanadium(V) : 18 g) which is solid matter was obtained. The composition ratio in dry matter of this cake I was 85 wt% for $Na_3VO_4$, 0.1 wt% for $Na_2SO_4$, and 15 wt% for NaOH. Most of the mixing of NaOH is due to adhering water, and thus the mixing ratio can be significantly reduced by improving the solid-liquid separability. In addition, the input energy required for the evaporation concentration step was 13950 kcal per 1.0 kg of pure vanadium recovered.

[Example 2]

(1) Preparation step and washing step
1.5 kg of wet combustion ash (moisture content: 14.9%, vanadium(V) content: 2.3%) was prepared as raw material ash, 15 kg of water (pH: 7) was added thereto, the mixture was stirred for 15 minutes, and then solid-liquid separation was performed with a centrifugal dehydrator. The weight of the obtained residue was 1.26 kg (moisture content: 29 wt%).
(2) Alkali extraction step and solid-liquid separation step
3.5 kg of water and 0.26 kg of 48 wt% caustic soda (NaOH) were added to 1.29 kg of the residue obtained in the washing step to achieve a pH of 13.5, and the mixture was stirred for 60 minutes, and then pressure filtration was performed to obtain 3.35 kg of a leach filtrate containing vanadium ($Na_3VO_4$ concentration: 2.3 wt%, $Na_2SO_4$ concentration: 0.4 wt%, NaOH concentration: 1.4 wt%).
(3) Evaporation concentration step
2100 g was taken from the obtained leach filtrate, and concentrated under reduced pressure under the conditions of 80 to 85°C and -70 kPa using MVR to obtain 420 g of a concentrated liquid (concentration ratio: 5 times, NaOH concentration: 7.0 wt %). In the evaporation concentration step, production trouble such as scaling and the like did not occur.

(4) Alkali concentration adjustment step

100 g was taken from the obtained concentrated liquid, and 10.8 g of NaOH powder was added and dissolved therein to obtain a concentration-adjusted liquid (NaOH concentration: 16.0 wt%).

(5) Crystallization/solid-liquid separation step

The obtained concentration-adjusted liquid was gradually cooled and stirred at 5°C for 5 hours to precipitate crystals. Then, solid-liquid separation was performed by suction filtration using a 1.0 $\mu$m membrane. As a result, 36.2 g of a cake I ($Na_3VO_4$: 11.5 g, vanadium(V): 3.2 g) which is a solid component was obtained. The composition ratio in dry matter of this cake I was 77.5 wt% for $Na_3VO_4$, 2.1 wt% for $Na_2SO_4$, and 20.4 wt% for NaOH.

[Comparison of power consumption]

The power consumption when the evaporation concentration step was performed under the following production conditions was calculated and compared for a case (A) that the alkali concentration adjustment step was not performed and NaOH was added only in the alkali extraction step and a case (B) that NaOH was added in the alkali extraction step and the alkali concentration adjustment step. The results are shown in Table 1.

Apparatus: MVR (mechanical vapor recompression)
Concentration ratio: 5 times
Evaporation amount: 10 tons/h
Alkali concentration before evaporation concentration: (A) 4.0 wt%, (B) 1.5 wt%
Boiling point increase: (A) 7°C, (B) 1°C
Liquid temperature when there is no boiling point increase: 70°C
Temperature difference at heater: 5°C
Supply fluid: 70°C saturated steam (31.2 kPa, 0.198 $kg/m^3$)
Discharge fluid: (A) 82°C saturated steam (51.4 kPa)
(B) 76°C saturated steam (40.2 kPa)
Blower efficiency: 80%
Blower power:

$$(A)\ (10\times1000/60/0.198) \times (51.4-31.2) \times 1000/6120/0.8/9.81 = 353\ kW$$

$$(B)\ (10\times1000/60/0.198) \times (40.2-31.2) \times 1000/6120/0.8/9.81 = 158\ kW$$

[Table 1]

(Table 1)

|  |  | A | B |
|---|---|---|---|
| Alkali concentration of leach filtrate | [wt.%] | 4.0 | 1.5 |
| Boiling point increase | [°C] | 7 | 1 |
| Power consumption | kW | 353 | 158 |

As shown in Examples 1 and 2, with the production method according to the present invention, a higher-purity vanadium compound was able to be efficiently produced. Furthermore, as shown in Table 1, it can be seen that with the production method according to the present invention in which the alkali concentration adjustment step is carried out after the evaporation concentration step, the power consumption is reduced to about 45% as compared with the method in which the alkali is added in the alkali extraction step before the evaporation concentration step. Moreover, in the production method of each Example, no production trouble occurred in the evaporation concentration step. From this evaluation result, advantages of the present invention are clear.

DESCRIPTION OF THE REFERENCE CHARACTERS

10, 20, 30···raw material ash preparation step
12, 22, 32···alkali extraction step
13, 23, 34···solid-liquid separation step
14, 24, 36···evaporation concentration step
15, 25, 38···crystallization/solid-liquid separation step
17, 27, 40···vanadium compound recovery
21···raw material ash washing step
37···alkali concentration adjustment step

**Claims**

1. A production method for a vanadium compound, comprising:

   an alkali extraction step of adding an alkali and water, or an alkali solution, to raw material ash containing at least an ammonium sulfate component including ammonium sulfate and/or ammonium hydrogen sulfate, sulfuric acid, vanadium, and at least one other metal selected from nickel, iron, and magnesium, such that a pH of 13 or higher is achieved, to leach the vanadium into a liquid phase to obtain an alkali leachate;
   a solid-liquid separation step of performing solid-liquid separation on the alkali leachate to remove insoluble matter as a solid component and obtain, as a leach filtrate, the alkali leachate containing vanadium;
   an evaporation concentration step of evaporating and concentrating the leach filtrate to obtain a concentrated liquid; and
   a crystallization/solid-liquid separation step of cooling the concentration liquid to a predetermined cooling temperature to crystalize the concentration liquid, and recovering, as a solid component, a precipitate containing a vanadium compound, wherein
   in the concentrated liquid, at the cooling temperature, a concentration of the vanadium compound is not less than a saturation concentration thereof and a concentration of an alkali sulfate is not greater than a saturation concentration thereof.

2. The production method for a vanadium compound according to claim 1, further comprising a raw material ash washing step of washing the raw material ash, at a stage previous to the alkali extraction step.

3. The production method for a vanadium compound according to claim 1, further comprising a recycling step of reusing a crystallization filtrate separated from the solid component in the crystallization/solid-liquid separation step, in the alkali extraction step, at a stage subsequent to the crystallization/solid-liquid separation step.

4. The production method for a vanadium compound according to claim 3, further comprising a crystallization filtrate amount adjustment step of adjusting an amount of the crystallization filtrate to be recycled, such that a total of sulfate ion brought in by the crystallization filtrate and sulfate ion brought in from the raw material ash in the alkali extraction step is not greater than an amount equivalent to a saturation concentration after cooling in the crystallization/solid-liquid separation step.

5. The production method for a vanadium compound according to claim 1, further comprising an oxidizing step of oxidizing the raw material ash, at a stage before the alkali extraction step.

6. The production method for a vanadium compound according to claim 1, further comprising a solid component washing step of washing the solid component, recovering a washing liquid containing vanadium, and transferring the washing liquid to the evaporation concentration step together with the leach filtrate, at a stage subsequent to the alkali extraction step.

7. A production method for a redox-flow battery electrolyte, comprising an electrolyte production step of producing a redox-flow battery electrolyte using, as a raw material, the vanadium compound separated by the production method for a vanadium compound according to any one of claims 1 to 6.

8. A production apparatus for a vanadium compound, comprising:

alkali extraction means that adds an alkali and water, or an alkali solution, to raw material ash containing at least an ammonium sulfate component including ammonium sulfate and/or ammonium hydrogen sulfate, sulfuric acid, vanadium, and at least one other metal selected from nickel, iron, and magnesium, such that a pH of 13 or higher is achieved, to leach the vanadium into a liquid phase to obtain an alkali leachate containing vanadium;
solid-liquid separation means that performs solid-liquid separation on the alkali leachate to remove insoluble matter as a solid component and obtain, as a leach filtrate, an alkali leachate containing vanadium;
evaporation concentration means that evaporates and concentrates the leach filtrate to obtain a concentrated liquid; and
crystallization/solid-liquid separation means that cools the concentration liquid to a predetermined cooling temperature to crystalize the concentration liquid, and recovers, as a solid component, a precipitate containing a vanadium compound, wherein
in the concentrated liquid, at the cooling temperature, a concentration of the vanadium compound is not less than a saturation concentration thereof and a concentration of an alkali sulfate is not greater than a saturation concentration thereof.

9. The production apparatus for a vanadium compound according to claim 8, further comprising raw material ash washing means that washes the raw material ash, at a stage before the alkali extraction means.

10. The production apparatus for a vanadium compound according to claim 8, further comprising recycling means that reuses a crystallization filtrate separated from the solid component in the crystallization/solid-liquid separation means, in the alkali extraction means, at a stage subsequent to the crystallization/solid-liquid separation means.

11. The production apparatus for a vanadium compound according to claim 8, further comprising crystallization filtrate amount adjustment means that adjusts an amount of the crystallization filtrate to be recycled, such that a total of sulfate ion brought in by the crystallization filtrate and sulfate ion brought in from the raw material ash in the alkali extraction means is not greater than an amount equivalent to a saturation concentration after cooling in the crystallization/solid-liquid separation means.

12. The production apparatus for a vanadium compound according to claim 8, further comprising oxidizing means that oxidizes the raw material ash, at a stage before the alkali extraction means.

13. The production apparatus for a vanadium compound according to claim 8, further comprising solid component washing means that washes the solid component, recovers a washing liquid containing vanadium, and transfers the washing liquid to the evaporation concentration means together with the leach filtrate, at a stage subsequent to the alkali extraction means.

14. A production apparatus for a redox-flow battery electrolyte, comprising electrolyte production means that produces a redox-flow battery electrolyte using, as a raw material, the vanadium compound separated by the production apparatus for a vanadium compound according to any one of claims 8 to 13.

15. A production method for a vanadium compound, comprising:

an alkali extraction step of adding an alkali and water, or an alkali solution, in an amount that achieves a pH of 13 or higher, to raw material ash containing at least an ammonium sulfate component including ammonium sulfate and/or ammonium hydrogen sulfate, sulfuric acid, and vanadium, to leach the vanadium into a liquid phase to obtain an alkali leachate containing vanadium;
a solid-liquid separation step of performing solid-liquid separation on the alkali leachate to obtain a leach filtrate containing vanadium;
an evaporation concentration step of evaporating and concentrating the leach filtrate to obtain a concentrated liquid;
an alkali concentration adjustment step of further adding an alkali or an alkali solution to the concentrated liquid to obtain a concentration-adjusted liquid; and
a crystallization/solid-liquid separation step of cooling the concentration-adjusted liquid to a predetermined cooling temperature to crystalize the concentration-adjusted liquid, and recovering, as a solid component, a precipitate containing a vanadium compound, wherein

an alkali concentration of the concentration-adjusted liquid is adjusted such that, at the cooling temperature, a concentration of the vanadium compound is not less than a saturation concentration thereof and a concentration of an alkali sulfate is not greater than a saturation concentration thereof.

16. The production method according to claim 15, wherein the alkali is a hydroxide of an alkali metal or an alkali earth metal.

17. The production method according to claim 15 or 16, wherein the alkali concentration of the concentration-adjusted liquid is adjusted to be not less than 10 mass% and not greater than 25 mass% in the alkali concentration adjustment step.

18. The production method according to any one of claims 15 to 17, further comprising a raw material ash washing step of washing the raw material ash under a condition of a pH less than 6 before the alkali extraction step.

19. The production method according to any one of claims 15 to 18, wherein, in the alkali extraction step, the vanadium is leached into the liquid phase at a temperature of not lower than 10°C and lower than 50°C.

20. A production method for a redox-flow battery electrolyte, comprising:

an alkali extraction step of adding an alkali and water, or an alkali solution, in an amount that achieves a pH of 13 or higher, to raw material ash containing at least an ammonium sulfate component including ammonium sulfate and/or ammonium hydrogen sulfate, sulfuric acid, and vanadium, to leach the vanadium into a liquid phase to obtain an alkali leachate containing vanadium;

a solid-liquid separation step of performing solid-liquid separation on the alkali leachate to obtain a leach filtrate containing vanadium;

an evaporation concentration step of evaporating and concentrating the leach filtrate to obtain a concentrated liquid;

an alkali concentration adjustment step of further adding an alkali or an alkali solution to the concentrated liquid to obtain a concentration-adjusted liquid;

a crystallization/solid-liquid separation step of cooling the concentration-adjusted liquid to a predetermined cooling temperature to crystalize the concentration-adjusted liquid, and recovering, as a solid component, a precipitate containing a vanadium compound; and

an electrolyte production step of producing a redox-flow battery electrolyte using, as a raw material, the precipitate containing the vanadium compound, wherein

an alkali concentration of the concentration-adjusted liquid is adjusted such that, at the cooling temperature, a concentration of the vanadium compound is not less than a saturation concentration thereof and a concentration of an alkali sulfate is not greater than a saturation concentration thereof.

21. A production apparatus for a vanadium compound, comprising:

alkali extraction means that adds an alkali and water, or an alkali solution, in an amount that achieves a pH of 13 or higher, to raw material ash containing at least an ammonium sulfate component including ammonium sulfate and/or ammonium hydrogen sulfate, sulfuric acid, and vanadium, to leach the vanadium into a liquid phase to obtain an alkali leachate containing vanadium;

solid-liquid separation means that performs solid-liquid separation on the alkali leachate to obtain a leach filtrate containing vanadium;

evaporation concentration means that evaporates and concentrates the leach filtrate to obtain a concentrated liquid;

alkali concentration adjustment means that further adds an alkali or an alkali solution to the concentrated liquid to obtain a concentration-adjusted liquid; and

crystallization/solid-liquid separation means that cools the concentration-adjusted liquid to a predetermined cooling temperature to crystalize the concentration-adjusted liquid, and recovers, as a solid component, a precipitate containing a vanadium compound, wherein

an alkali concentration of the concentration-adjusted liquid is adjusted by the alkali concentration adjustment means such that, at the cooling temperature, a concentration of the vanadium compound is not less than a saturation concentration thereof and a concentration of an alkali sulfate is not greater than a saturation concentration thereof.

**22.** The production apparatus according to claim 21, further comprising raw material ash washing means that washes the raw material ash with washing water before adding the alkali and the water or the alkali solution to the raw material ash, and pH adjustment means that adjusts a pH during washing to be less than 6.

**23.** The production apparatus according to claim 21 or 22, further comprising temperature control means that, while the vanadium is leached into the liquid phase by adding the alkali and the water or the alkali solution to the raw material ash, controls a temperature of the leaching to be not lower than 10°C and lower than 50°C.

**24.** A production apparatus for a redox-flow battery electrolyte, comprising:

alkali extraction means that adds an alkali and water, or an alkali solution, in an amount that achieves a pH of 13 or higher, to raw material ash containing at least an ammonium sulfate component including ammonium sulfate and/or ammonium hydrogen sulfate, sulfuric acid, and vanadium, to leach the vanadium into a liquid phase to obtain an alkali leachate containing vanadium;
solid-liquid separation means that performs solid-liquid separation on the alkali leachate to obtain a leach filtrate containing vanadium;
evaporation concentration means that evaporates and concentrates the leach filtrate to obtain a concentrated liquid;
alkali concentration adjustment means that further adds an alkali or an alkali solution to the concentrated liquid to obtain a concentration-adjusted liquid;
crystallization/solid-liquid separation means that cools the concentration-adjusted liquid to a predetermined cooling temperature to crystalize the concentration-adjusted liquid, and recovers, as a solid component, a precipitate containing a vanadium compound; and
electrolyte production means that produces a redox-flow battery electrolyte using, as a raw material, the precipitate containing the vanadium compound, wherein
an alkali concentration of the concentration-adjusted liquid is adjusted by the alkali concentration adjustment means such that, at the cooling temperature, a concentration of the vanadium compound is not less than a saturation concentration thereof and a concentration of an alkali sulfate is not greater than a saturation concentration thereof.

**FIG. 1A**

COMBUSTION ASH (RAW MATERIAL) ~ 10

SODIUM HYDROXIDE

↓

ALKALI EXTRACTION ~ 12

↓

SOLID-LIQUID SEPARATION ~ 13

↓

EVAPORATION CONCENTRATION ~ 14

↓

CRYSTALLIZATION/SOLID-LIQUID SEPARATION ~ 15 → CRYSTALLIZATION FILTRATE

SOLID COMPONENT

↓

RECOVER VANADIUM RAW MATERIAL ~ 17

**FIG. 1B**

| RAW MATERIAL ASH | | | | ~ 10 |
| CARBON | AMMONIUM SULFATE | SULFURIC ACID | VANA | |

↓

| RAW MATERIAL ASH | | | | ~ 12 |
| CARBON | AMMONIUM SULFATE | SULFURIC ACID | VANA | |
| NaOH | | | | |

↓

| FILTRATE | | | ~ 13 |
| AMMONIUM SULFATE | SULFURIC ACID | VANA | |
| NaOH | | | |

↓

~ 14

| FILTRATE | | | ⇩ VOLUME REDUCTION (1/5) |
| | | | |
| NaOH | | | CRYSTALLIZATION FILTRATE |

↓

| AMMONIUM SULFATE | SODIUM SULFATE | Na VANA | ~ 15 |

⇕

| FILTRATE | AMMONIUM SULFATE | SULFURIC ACID | VANA | |
| NaOH | | | | CRYSTALLIZATION FILTRATE |

FIG. 2A

FIG. 2B

EP 3 984 958 A1

## FIG. 3A

COMBUSTION ASH (RAW MATERIAL) — 20

WATER ↓

WASHING — 21

SODIUM HYDROXIDE ↓

ALKALI EXTRACTION — 22                    RECYCLING

SOLID-LIQUID SEPARATION — 23        — 26

EVAPORATION CONCENTRATION — 24

CRYSTALLIZATION/SOLID-LIQUID SEPARATION — 25

CRYSTALLIZATION FILTRATE

SOLID COMPONENT ↓

RECOVER VANADIUM RAW MATERIAL — 27

## FIG. 3B

| RAW MATERIAL ASH | | | | — 20 |
| CARBON | AMMONIUM SULFATE | SULFURIC ACID | VANA | |

| RAW MATERIAL ASH | | — 21 |
| CARBON | | VANA | |
| | AMMONIUM SULFATE | SULFURIC ACID | → |

| RAW MATERIAL ASH | | — 22 |
| | CARBON | VANA |
| | NaOH | |

| FILTRATE | | — 23 |
| | VANA |
| NaOH | |

VOLUME REDUCTION (1/5)

| FILTRATE | | — 24 |
| | VANA |
| CRYSTALLIZATION FILTRATE | NaOH | |

Na VANA

| | | — 25 |
| CRYSTALLIZATION FILTRATE | FILTRATE | VANA |
| | NaOH | |

FIG. 4A — LEACHING RATIO BY pH FOR V

FIG. 4B — LEACHING RATIO BY pH FOR Ni

FIG. 4C — LEACHING RATIO BY pH FOR Fe

FIG. 4D — LEACHING RATIO BY pH FOR Mg

EP 3 984 958 A1

FIG. 5

FIG. 6A

FIG. 6B

EP 3 984 958 A1

COMBUSTION ASH (RAW MATERIAL) — 30

SODIUM HYDROXIDE

ALKALI EXTRACTION STEP — 32

SOLID-LIQUID SEPARATION STEP — 34

EVAPORATION CONCENTRATION STEP — 36

SODIUM HYDROXIDE

ALKALI CONCENTRATION ADJUSTMENT STEP — 37

CRYSTALLIZATION/SOLID-LIQUID SEPARATION — 38

CRYSTALLIZATION FILTRATE

SOLID COMPONENT

RECOVER VANADIUM RAW MATERIAL — 40

**FIG. 7A**

| RAW MATERIAL ASH | | | | — 30 |
|---|---|---|---|---|
| CARBON | AMMONIUM SULFATE | SULFURIC ACID | VANA | |

| RAW MATERIAL ASH | | | | — 32 |
|---|---|---|---|---|
| CARBON | AMMONIUM SULFATE | SULFURIC ACID | VANA | |
| NaOH | | | | |

| FILTRATE | | | — 34 |
|---|---|---|---|
| AMMONIUM SULFATE | SULFURIC ACID | VANA | |
| NaOH | | | |

— 36

| FILTRATE | | | |
|---|---|---|---|
| AMMONIUM SULFATE | SULFURIC ACID | VANA | |
| NaOH | | | |

VOLUME REDUCTION (1/5)

CRYSTALLIZATION FILTRATE

— 37

| FILTRATE | AMMONIUM SULFATE | SULFURIC ACID | VANA | CRYSTALLIZATION FILTRATE |
|---|---|---|---|---|
| NaOH | | | | |

| AMMONIUM SULFATE | SODIUM SULFATE | Na VANA |
|---|---|---|

— 38

| FILTRATE | AMMONIUM SULFATE | SULFURIC ACID | VANA | CRYSTALLIZATION FILTRATE |
|---|---|---|---|---|
| NaOH | | | | |

**FIG. 7B**

FIG. 8

FIG. 9A

FIG. 9B

## INTERNATIONAL SEARCH REPORT

| | International application No. |
|---|---|
| | PCT/JP2020/023075 |

**A. CLASSIFICATION OF SUBJECT MATTER**
C01G 31/00(2006.01)i; B09B 3/00(2006.01)i; C22B 3/12(2006.01)i; C22B
34/22(2006.01)i; H01M 8/02(2016.01)i; H01M 8/18(2006.01)i
FI: C01G31/00; B09B3/00 304G; C22B3/12; C22B34/22; H01M8/02; H01M8/18
According to International Patent Classification (IPC) or to both national classification and IPC

**B. FIELDS SEARCHED**

Minimum documentation searched (classification system followed by classification symbols)
C01G31/00; B09B3/00; C22B3/12; C22B34/22; H01M8/02; H01M8/18

| Documentation searched other than minimum documentation to the extent that such documents are included in the fields searched | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2017/208471 A1 (SHOWA DENKO KABUSHIKI KAISHA) 07.12.2017 (2017-12-07) entire text | 1-24 |
| A | CN 101748296 A (JIANG Zhangti) 23.06.2010 (2010-06-23) entire text | 1-24 |
| A | JP 53-19118 A (BABA RESEARCH INSTITUTE LTD.) 22.02.1978 (1978-02-22) entire text | 1-24 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 August 2020 (17.08.2020) | 25 August 2020 (25.08.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT

Information on patent family members

| International application no. |
|---|
| PCT/JP2020/023075 |

| Patent Documents referred in the Report | Publication Date | Patent Family | Publication Date |
|---|---|---|---|
| WO 2017/208471 A1 | 07 Dec. 2017 | US 2018/0135149 A1 entire text EP 3466887 A1 CN 107848832 A TW 201806870 A | |
| CN 101748296 A | 23 Jun. 2010 | (Family: none) | |
| JP 53-19118 A | 22 Feb. 1978 | US 4145397 A entire text GB 1585841 A DE 2735684 A | |

Form PCT/ISA/210 (patent family annex) (January 2015)

**EP 3 984 958 A1**

**Patent documents cited in the description**

- WO 2017208471 A
- JP 2019046723 A